# EUROPÄISCHE PATENTSCHRIFT

(11) **EP 0 764 310 B1**
(45) Veröffentlichungstag und Bekanntmachung des Hinweises auf die Patenterteilung: **24.10.2001**
(21) Anmeldenummer: 96908001.9
(22) Anmeldetag: 03.04.1996
(51) Int. Cl.: G06K 15/00

(54) **VERFAHREN ZUR GENERIERUNG EINER CONTONE-MAP**
METHOD OF GENERATING A CONTONE MAP
TECHNIQUE DE PRODUCTION D'UNE MATRICE D'ELEMENTS D'IMAGE EN DEGRADE CONTINU

(30) Priorität: 07.04.1995 DE 19513105
(43) Veröffentlichungstag der Anmeldung: 26.03.1997
(73) Patentinhaber: Heidelberger Druckmaschinen Aktiengesellschaft, 69115 Heidelberg (DE)
(72) Erfinder: SÖKER, Wilfried, Helmut, D-63674 Altenstadt (DE)
(86) Internationale Anmeldenummer: DE9600585
(87) Internationale Veröffentlichungsnummer: WO9631837

(56) Entgegenhaltungen:
- EP-A- 0 470 782
- EP-A- 0 571 145
- EP-A- 0 574 224
- EP-A- 0 613 102
- US-A- 5 125 072
- US-A- 5 129 049

## Beschreibung

Die Erfindung bezieht sich auf das Gebiet der elektronischen Reproduktionstechnik und betrifft ein Verfahren zur Generierung einer Contone-Map für elektronische Belichter oder Recorder mit hoher Auflösung zur pixel- und zeilenweisen Belichtung von Aufzeichnungsmaterial.

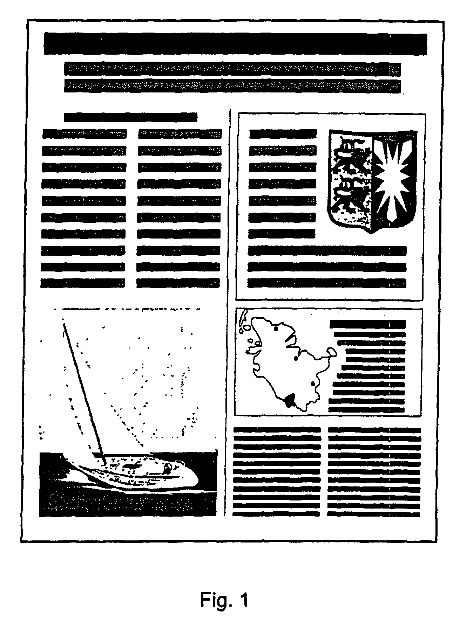

In der Reproduktionstechnik werden Druckvorlagen für Druckseiten erzeugt, die alle zu druckenden Elemente wie Texte, Grafiken und Bilder enthalten. Fig. 1 zeigt ein Beispiel für eine Druckseite. Für den farbigen Druck wird für jede Druckfarbe eine separate Druckvorlage erzeugt, die alle Elemente enthält, die in der jeweiligen Farbe gedruckt werden. Für den Vierfarbdruck sind das die Druckfarben Cyan, Magenta, Gelb und Schwarz (C, M, Y, K). Die nach Druckfarben separierten Druckvorlagen werden auch Farbauszüge genannt. Die Druckvorlagen werden in der Regel gerastert (Screening) und in hoher Auflösung auf Filme belichtet, die dann zur Herstellung der Druckformen (Druckplatten, Druckzylinder) weiter verarbeitet werden. Alternativ können die Druckvorlagen in speziellen Recordem auch direkt auf Druckplatten belichtet werden. Zum Prüfen des Inhalts und der Farben der Druckseiten werden Druckvorlagen in Proofrecordern mit einem Aufzeichnungsprozeß belichtet, der in einer farbigen Ausgabe den Druckprozeß simuliert. Anstelle einzelner Druckseiten können Druckvorlagen auch Druckbögen enthalten, die aus einer Anordnung von mehreren Druckseiten bestehen.

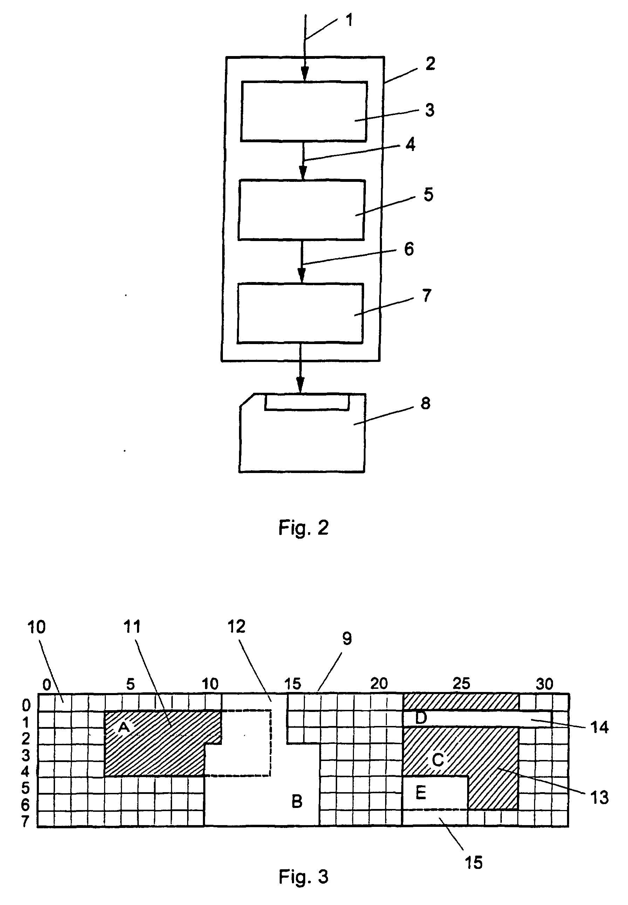

Der bisher nach dem Stand der Technik überwiegend verwendete Arbeitsablauf bei der Belichtung von Druckvorlagen für Druckseiten, die in der Seitenbeschreibungssprache PostScript® erzeugt worden sind, ist in Fig. 2 gezeigt (PostScript® ist eine eingetragene Marke der Firma Adobe Systems, Inc.). Die PostScript-Daten (1) werden einem Raster-Image-Prozessor (=RIP) (2) zugeführt, der ein speziell für diese Aufgabe optimierter Rechner sein kann oder ein Programm auf einem Standardrechner. Im Normalfall werden in einem Vorprozeß separierte PostScript-Daten (1) für jeden Farbauszug einer Druckseite erzeugt und an den RIP (2) weitergegeben (separated PostScript). Alternativ kann eine farbige Druckseite auch in einem einzigen PostScript-Datenbestand erzeugt werden (composite PostScript). Im folgenden wird der Fall der separierten PostScript-Daten (1) weiter erläutert.

In einem ersten Schritt werden die PostScript-Daten (1) in einem Interpreter (3) analysiert und in eine Folge von ersten grafischen Objekten zerlegt. Dazu wird die Druckvorlage in horizontale Streifen (Bänder) geteilt, die nacheinander bearbeitet werden. Fig. 3 zeigt einen Bandausschnitt (9) mit einigen vom Interpreter erzeugten Objekten. Der Bandausschnitt (9) ist in Aufzeichnungspixel (10) aufgeteilt. Im Beispiel von Fig. 3 ist der Bandausschnitt 8 Pixel hoch, numeriert von 0 bis 7, und 32 Pixel breit, numeriert von 0 bis 31. Die Auflösung kann symmetrisch sein (in horizontaler und vertikaler Richtung gleich), oder auch unsymmetrisch, z.B. horizontal doppelt so groß wie vertikal. Die Objekte A bis E (11,12, 13, 14, 15) beschreiben Teilsegmente von Text-, Grafik- oder Bildelementen, die in den Bandausschnitt (9) hineinfallen.

Die Objekte A bis E (11,12, 13, 14, 15) werden vom Interpreter in einem Datenformat ausgegeben, das als Display-Liste (4) (Fig. 2) bezeichnet wird. Das Datenformat beschreibt für jedes Objekt seine geometrische Form und mit welchem Grauwert es gefüllt ist. In der Display-Liste (4) erscheinen die Objekte A bis E (11, 12, 13, 14, 15) nacheinander in der Reihenfolge, in der die zugehörigen Seitenelemente in den PostScript-Daten beschrieben sind. Dabei können Objekte, die in der Display-Liste (4) später erscheinen, Objekte, die früher in der Display-Liste (4) erschienen sind, teilweise oder ganz überdecken. Im Beispiel von Fig. 3 wird das Objekt A (11) teilweise vom Objekt B (12) überdeckt. Ebenso überdecken die Objekte D (14) und E (15) das Objekt C (13).

Im RIP (2) wird die Display-Liste (4) in einem weiteren Schritt einem Rastergenerator (5) zugeführt, der die Objekte der Display-Liste (4) nacheinander in mit Rasterpunkten gefüllte Flächen umsetzt und als Bitmap-Daten (6) in einen Bitmap-Speicher (7) schreibt. Die Rasterpunktgröße wird dabei je nach dem Grauwert des Objekts in der Display-Liste (4) variiert. Die Bitmap-Daten (6) von Objekten, die später in der Display-Liste (4) erscheinen, überschreiben jeweils die entsprechenden Bereiche des Bitmap-Speichers (7). Nachdem alle Objekte eines Bandes vom Rastergenerator (5) gerastert und in den Bitmap-Speicher (7) geschrieben wurden, wird der Inhalt des Bitmap-Speichers (7) als Steuersignalwerte an den Recorder (8) weitergeleitet und dort belichtet.

Durch die Überlappung der Objekte in der Display-Liste (4) und die wiederholte Rasterung von Teilflächen im Bitmap-Speicher (7), die sich überdecken, ist die Zeit, die der RIP (2) bei der bisherigen Arbeitsweise für die Bearbeitung und Ausgabe eines Bandes an den Recorder (8) benötigt, variabel und nicht vorhersehbar. Sie hängt davon ab, wieviele Objekte in einem Band vorkommen und zu welchem Anteil sie sich überdecken. Bei der hohen Geschwindigkeit modemer Recorder kann die Datenrate beim Einsatz einer unsymmetrischen Auflösung z.B. bis zu 200 Millionen Pixel/s betragen. Ist nicht sichergestellt, daß der RIP (2) die Steuersignalwerte für den Recorder (8) kontinuierlich mit der durch die Recorder-Geschwindigkeit vorgegebenen Datenrate liefern kann, muß der Recorder (8) im sogenannten Start/ Stop-Betrieb arbeiten. Beim Start/Stop-Betrieb wird der Recorder beim Ausbleiben der Steuersignalwerte solange angehalten, bis der RIP (2) wieder Steuersignalwerte liefert, und dann wird die Belichtung ansatzlos am Ort der Unterbrechung fortgesetzt.

Die mechanische und optische Konstruktion eines Recorders, der in hoher Auflösung Filme oder Druckplatten im Start/Stop-Betrieb belichten kann, ohne daß die Start/Stop-Stellen in der fertigen Aufzeichnung zu sehen sind, ist aufwendiger und teurer als für einen Recorder, der kontinuierlich belichtet. Außerdem benötigt das Anhalten und Wiederanlaufen des Recorders für jeden Start/Stop-Vorgang zusätzliche Zeit, so daß die Belichtung dadurch erheblich länger dauern kann als bei einem kontinuierlichen Betrieb des Recorders.

Andererseits erfordert ein RIP, der PostScript-Daten für Druckseiten unabhängig von der Komplexität des Seiteninhalts jeweils so schnell in Bitmap-Daten umsetzen kann, daß er mit der Belichtungsgeschwindigkeit eines kontinuierlich arbeitenden Recorders immer Schritt halten kann, sehr schnelle Prozessoren und große Speicher und wird dadurch ebenfalls teuer.

Auch die Lösung, den Bitmap-Speicher (7) im RIP so groß zu machen, daß er die Bitmap-Daten einer ganzen Druckvorlage zwischenspeichern kann (Page Buffer), ist nicht praktikabel, da der Speicher dann sehr groß und teuer wird. Für eine Druckplatte der Größe 70 cm × 100 cm und eine Auflösung von horizontal 2666 Pixel/cm (6772 dpi; dpi=dots per inch) und von vertikal 1333 Linien/cm (3383 dpi) ergibt sich eine Puffergröße von 3109,6 MByte. Eine Festplatte als Page Buffer scheidet aus, da die Bitmap-Daten von ihr nicht mit der erforderlichen Geschwindigkeit von 100 bis 200 Mbit/s ausgelesen werden können.

Durch die Tatsache, daß einige auf dem Markt befindliche Recorder keine oder nur eine unzureichende Möglichkeit für einen Start/ Stop-Betrieb bieten, entsteht die Notwendigkeit, eine genügend hohe Geschwindigkeit bei der Datenumsetzung im RIP mit vernünftigem Prozessor- und Speicheraufwand zu erreichen.

Wegen des hohen Speicherbedarfs für die fertige Bitmap einer Druckvorlage kann bei der bisherigen Arbeitsweise für die Belichtung von PostScript-Daten die Bitmap einer Druckvorlage in der Regel nicht zwischengespeichert werden. Wenn dieselbe Druckvorlage noch einmal belichtet werden soll, z.B. weil der zuerst belichtete Film oder die Druckplatte beschädigt wurde, muß daher der gesamte Verarbeitungsprozeß von der Interpretation der PostScript-Daten bis zur Belichtung noch einmal durchlaufen werden. Dies kostet zusätzliche Zeit und belegt den RIP, der in dieser Zeit schon eine neue Druckvorlage bearbeiten könnte.

Aus dem gleichen Grund erfordert die zusätzliche Belichtung der Druckvorlage auf einem Proof-Ausgabegerät bei der bisherigen Arbeitsweise noch einmal den gesamten Durchlauf der PostScript-Daten durch den RIP und kostet daher unnötig Zeit. Als weiterer Nachteil kommt hinzu, daß das Proofgerät im allgemeinen eine andere Auflösung hat als der Filmbelichter für die Farbauszüge, so daß der RIP für die beiden Ausgabegeräte mit unterschiedlicher Auflösung arbeiten muß. Dies führt zu kleinen Unterschieden zwischen der Proofausgabe und der Filmausgabe, z.B. in Bereichen, wo Objekte genau aneinandergrenzen. Die Proofausgabe gibt somit nicht immer in allen Details das wieder, was später gedruckt wird. Dies widerspricht dem Sinn einer Proofausgabe und ist daher nachteilig.

Eine Variante der bisherigen Arbeitsweise ist in der Patentanmeldung EP 0 571 145 A1 beschrieben. Anspruch 1 wurde gegen dieses Dokument abgegrenzt. Aus verschiedenen Quellen kommende Druckseiten, die in unterschiedlichen Druckersprachen beschrieben sind, werden analysiert und in eine einheitliche Druckersprache umgewandelt, bevor diese dann in herkömmlicher Weise in die druckbaren Bitmapdaten umgewandelt wird. Die Analysesoftware für eine bestimmte Druckersprache kann im RIP bereits vorhanden sein, oder sie kann bei Bedarf von einem Server geladen werden. Es ist auch möglich, daß auf einer Druckseite Elemente kombiniert werden, die in verschiedenen Druckersprachen beschrieben sind.

In der Patentschrift US 5,125,072 wird ein Verfahren beschrieben, mit dem hoch aufgelöste Text/Grafik Elemente und niedrig aufgelöste Bildelemente während der Ausgabe miteinander zu einer Druckseite kombiniert werden. Dazu werden die Text/Grafik Elemente in herkömmlicher Weise aus einer Seitenbeschreibungssprache interpretiert und in der für die Ausgabe benötigten Auflösung in einen Bitmap-speicher geschrieben. Dabei werden Überlappungen und dadurch erforderliches mehrfaches Überschreiben der gleichen Bereiche im Bitmapspeicher nicht verhindert. Die niedrig aufgelösten Bilddaten werden in einen separaten Videospeicher geschrieben und erst während der Ausgabe auf die hohe Ausflösung des Bitmap-speichers hochinterpoliert und dann mit den Bitmapdaten zusammengefügt. Durch die Speicherung der Bilddaten in niedriger Auflösung wird Speicherplatz gespart.

In der Patentanmeldung EP 0 470 782 A2 wird ein Verfahren beschrieben, das die Seitenbeschreibungssprache zunächst in eine Folge von einfachen BLIT-Befehlen umsetzt (BLIT = Block Image Transfer). Die BLIT-Befehle beschreiben den Transfer von rechteckigen Bitmapblöcken von einem Speicherbereich in einen anderen, wobei während des Transfers noch logische Verknüpfungen von verschiedenen Blöcken ausgeführt werden oder die Blöcke gerastert werden. Die rechteckigen Blöcke können im einfachsten Fall auch Pixelgruppen aus einer Zeile sein. Die BLIT-Befehle werden zwischengespeichert und später ausgeführt, um in nach Bändern organisierten Pufferspeichem mittels eines Realtime BLIT Prozessors die druckbaren Bitmapdaten so schnell zu schreiben, daß das Ausgabegerät bei der Aufzeichnung nicht anhalten muß. Bei der Erzeugung der BLIT-Befehle werden die Befehle für eine neue Pixelgruppe und eine bereits vorhandene Pixelgruppe zu einem Befehl zusammengefaßt, wenn die neue Pixelgruppe vollständig in die bereits vorhandene Pixelgruppe hineinfällt.

Die Aufgabe der vorliegenden Erfindung ist, die zuvor erläuterten Nachteile zu vermeiden und ein Verfahren anzugeben, mit dem eine komprimierte und überlappungsfreie Contone-Map (Delta-Liste) mit geringem Speicheraufwand generiert wird und mit hoher Geschwindigkeit komprimiert, dekomprimiert und belichtet werden kann. Dies ermöglicht die kostengünstige Zwischenspeicherung der ganzen Druckvorlage und die Belichtung von Filmen und Proofausgaben von der gespeicherten Contone-Map, ohne die PostScript-Daten jedesmal neu interpretieren zu müssen. Die Komprimierung und die Überlappungsfreiheit der Contone-Map ermöglicht die Umsetzung der Contone-Map in gerasterte Bitmap-Daten mit hoher Geschwindigkeit und die Belichtung ohne Start/Stop-Betrieb des Recorders. Diese Aufgabe wird durch den Anspruch 1 gelöst. Die Unteransprüche enthalten vorteilhafte Ausgestaltungen der Erfindung.

Das neue Datenformat, das auch als Delta-Liste bezeichnet wird, ist mit Vorteil bei Ausgabegeräten mit hoher Auflösung für die verschiedenen Ausgabeprozesse wie Tiefdruck, Offsetdruck, Proofing, Monitor u.s.w. ohne Änderung des Interpreters im RIP einsetzbar. Der Speicherbedarf für die Delta-Liste ist wesentlich geringer als für einen Page Buffer, beispielsweise je nach Art des Jobs ca. 2 MByte bis 30 MByte pro DIN A4-Seite.

Die Erfindung wird nachfolgend anhand der Figuren 1 bis 24 näher beschrieben.

Es zeigen:
- Fig. 1: ein Beispiel für eine Druckseite mit Text-, Grafik- und Bildelementen,
- Fig. 2: den Arbeitsablauf bei der Belichtung von PostScript-Daten nach dem Stand der Technik,
- Fig. 3: einen Ausschnitt aus einem Band mit Objekten, die der Interpreter erzeugt,
- Fig. 4: den Arbeitsablauf bei der Belichtung von PostScript-Daten mit der Erzeugung und Weiterverarbeitung der Delta-Liste,
- Fig. 5: die Unterteilung einer Druckvorlage in Bänder und Zonen,
- Fig. 6: ein Beispiel für die Komprimierung in Y-Richtung,
- Fig. 7: den Aufbau des Zwischenpuffers,
- Fig. 8: den Zwischenpuffer nach Eintragung des Objekts A,
- Fig. 9: den Zwischenpuffer nach Eintragung des Objekts B,
- Fig.10: den Zwischenpuffer nach Eintragung des Objekts C,
- Fig.11: den Zwischenpuffer nach Eintragung des Objekts D,
- Fig.12: den Zwischenpuffer nach Eintragung des Objekts E,
- Fig.13: die in den Zwischenpuffer eingetragenen Objekte,
- Fig.14: ein Objekt, das sich über mehrere Zonen erstreckt,
- Fig.15: ein Ablaufdiagramm zur Erzeugung der Delta-Liste,
- Fig.16: ein Ablaufdiagramm zum Eintragen eines Objekts in mehrere Zonen des Zwischenpuffers,
- Fig.17: ein Ablaufdiagramm zum Eintragen eines Objekts in eine Zone des Zwischenpuffers,
- Fig.18: ein Ablaufdiagramm zum Eintragen eines Objekts in eine Zeile des Zwischenpuffers,
- Fig.19: ein Ablaufdiagramm zur Komprimierung der Objekte im Zwischenpuffer und zur Erzeugung der Delta-Kommandos,
- Fig.20: ein Ablaufdiagramm zur Komprimierung in Y-Richtung,
- Fig.21: ein Beispiel für die Komprimierung in Y-Richtung,
- Fig.22: das Ergebnis der Komprimierung in Y-Richtung,
- Fig.23: ein Beispiel für die Komprimierung in X-Richtung,
und
- Fig.24: ein Ablaufdiagramm zur Komprimierung in X-Richtung.

### Allgemeines

Eine Contone-Map beschreibt eine zu reproduzierende Druckvorlage in Form von Grauwerten, in der jedem Pixel ein Grauwert zugeordnet ist. Die Contone-Map wird aus den Seitenbeschreibungsdaten (PostScript-Daten) der zu reproduzierenden Druckseite erzeugt. Die Grauwerte der Contone-Map können direkt zur Ansteuerung des Recorders verwendet werden, wenn der Aufzeichnungsprozeß kontinuierliche Tonwerte wiedergeben kann, wie z.B. ein Proof-Ausgabegerät. Für Aufzeichnungsprozesse, die nur zwei Tonwerte wiedergeben können (weiß bzw. schwarz), werden die Grauwerte in einem Rastergenerator, der dem Recorder vorgeschaltet ist, vor der Aufzeichnung in Rasterpunkte umgesetzt, mit denen die Grauwerte für das Auge simuliert werden. Im Recorder werden die Druckvorlagen durch mindestens einen Belichtungsstrahl pixel- und zeilenweise auf das Aufzeichnungsmaterial belichtet. Während der Belichtung bestimmen die Steuersignalwerte, welche Pixel als Teile der Rasterpunkte belichtet oder nicht belichtet werden, indem die Steuersignalwerte den Belichtungsstrahl entsprechend ein- und ausschalten.

Für die Aufbereitung der Delta-Liste werden die Überlappungen der Objekte in der Display-Liste geeignet eliminiert und anschließend die Daten möglichst hoch komprimiert. Die Delta-Liste ist überlappungsfrei, weil sie nur Objekte enthält, die aneinandergrenzen und sich nicht überlappen. Für jedes Pixel gibt es in der Delta-Liste nur einen Grauwert. Bei der Wahl des Komprimierungs-Verfahrens muß ein Kompromiß zwischen einem hohen Kompressionsfaktor, einer schnellen Komprimierung und vor allem einer sehr schnellen Dekomprimierung gefunden werden.

In der Delta-Liste sind im wesentlichen einfache grafische Objekte und Rasterinformationen enthalten, die durch einen Rastergenerator schritthaltend mit der Recorder-Geschwindigkeit in Bitmap-Daten umgesetzt und ausgegeben werden können. Dadurch, daß das erfindungsgemäße Datenformat überlappungsfrei ist, ist die Ausgabegeschwindigkeit exakt vorhersehbar, wodurch ein Start/Stop-Betrieb des Recorders vermieden werden kann. Für jede Druckseite kann die erforderliche Rastergeschwindigkeit bei der Generierung der Delta-Liste berechnet und gegebenenfalls für die Steuerung des Rastergenerators oder des Recorders ausgewertet werden.

Die Erzeugung der Delta-Liste und die Rasterung können mit unterschiedlichen Auflösungen durchgeführt werden. Eine vorteilhafte Variante ist die Berechnung der Objekte in der Delta-Liste mit 666,5 Pixel/cm (1693 dpi) und die Rasterung der Grauwerte mit 1333 Pixel/cm (3386 dpi). Die Rasterung kann beispielsweise auch unsymmetrisch erfolgen mit 4000 Pixel/cm × 1333 Pixel/cm (10160 dpi × 3386 dpi).

Das Format der Delta-Liste ist Byte-orientiert. Jedes Byte ist ein Befehl, dem in manchen Fällen Datenbytes nachfolgen. Die Codierung der Befehle ist derart gewählt, daß eine möglichst hohe Kompression der Daten erreicht wird. Am Anfang jeder Delta-Liste befinden sich allgemeine Informationen, z.B. die Länge der Delta-Liste und die Länge einer Scanlinie. Außerdem enthält die Delta-Liste Informationen über das Rasterverfahren (Screening), nach dem die Objekte vom Rastergenerator in Bitmaps umgesetzt werden sollen.

Eine Druckseite kann aus mehreren Delta-Listen bestehen, die gegebenenfalls parallel abgearbeitet werden. Die Erzeugung einer Druckseite kann daher auf mehrere Prozesse verteilt werden, deren Delta-Listen dann zusammengeführt werden (Multiplexing).

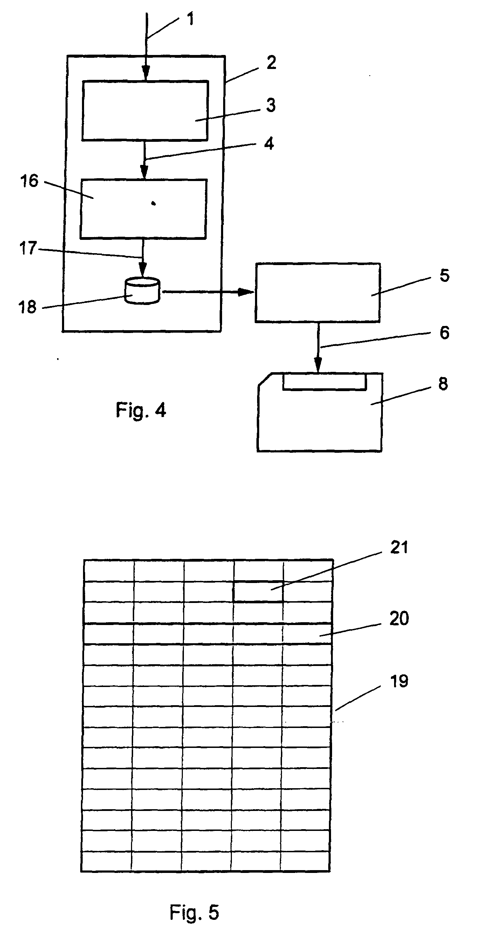

Fig. 4 zeigt einen erfindungsgemäß verbesserten Arbeitsablauf für die Interpretation und Belichtung von PostScript-Daten, bei dem eine Contone-Map im Datenformat der Delta-Liste erzeugt wird. Die PostScript-Daten (1), die den Inhalt der Druckvorlage beschreiben, werden dem RIP (2) zugeführt, wo sie in einem ersten Schritt vom Interpreter (3) analysiert und in eine Display-Liste (4) umgewandelt werden, wie es zuvor bereits erläutert wurde. In einem zweiten Schritt wird aus der Display-Liste von einem Delta-Listen Generator (16) die überlappungsfreie Contone-Map der Delta-Liste (17) erzeugt und z.B. auf einem Plattenspeicher (18) gespeichert. Zu einem späteren Zeitpunkt werden die gespeicherten Delta-Listen der Druckvorlagen, z.B. die verschiedenen Farbauszüge einer Druckseite, nacheinander vom Plattenspeicher (18) abgerufen, vom Rastergenerator (5) in Bitmaps (6) umgewandelt und im Recorder (8) belichtet. Die Rasterung der Delta-Liste geschieht schritthaltend mit der Recordergeschwindigkeit.

Da in verschiedenen Teilen einer Druckseite sehr unterschiedliche Seiteninhalte mit verschiedenen Eigenschaften bezüglich der Komprimierung vorkommen können, wird die Druckseite bei der Generierung der Delta-Liste in horizontale Streifen (Bänder) und diese weiter in aufeinanderfolgende Abschnitte (Zonen) unterteilt. Fig. 5 zeigt die Einteilung einer Druckvorlage (19) in Bänder (20) und Zonen (21). Die Höhe der Bänder und die Breite der Zonen ist beliebig, jedoch ist es für die Verarbeitung vorteilhaft, wenn die Bänder alle gleich hoch und die Zonen alle gleich breit sind. Ferner ist es vorteilhaft, wenn die Bandhöhe und die Zonenbreite Potenzen von 2 sind.

Da oft große Teile der Information auf einer Druckseite aus wenigen unterschiedlichen Grauwerten bestehen, z.B. nur aus Schwarz/Weiß-Information (Text), werden Grauwerte in der Delta-Liste mit verschiedener Bitzahl codiert, z.B. 1 Bit/Grauwert für Schwarz/Weiß-Information und 8 Bit je Grauwert für Contone-Information. Diese Maßnahme trägt ebenfalls zur Komprimierung der Delta-Liste bei. Wenn sich aufeinanderfolgende Grauwerte nur wenig unterscheiden, wie es z.B. in Bildern häufig vorkommt, kann eine weitere Komprimierung dadurch erreicht werden daß die Differenzen zwischen den Grauwerten gebildet werden und mit einer geringeren Bitzahl codiert werden (Differenz-Codierung).

Die Komprimierung der Daten im erfindungsgemäßen Datenformat der Delta-Liste basiert auf dem Lauflängen-Verfahren, d.h. auf der Codierung sich in einer Zeile wiederholender Grauwerte. Im Datenstrom existieren Kommando-Bytes, die von einer Lauflänge und/oder einem oder mehreren Grauwerten begleitet sein können. Die Komprimierung berücksichtigt auch Wiederholungen des ganzen Inhalts einer Zone in Y-Richtung (X-Richtung = Haupt-Scanrichtung; Y-Richtung = Neben-Scanrichtung). In der folgenden Tabelle werden beispielhaft einige Delta-Listen Kommandos und ihre Codierung erläutert, die zum Verständnis der Erzeugung der Delta-Liste wichtig sind.

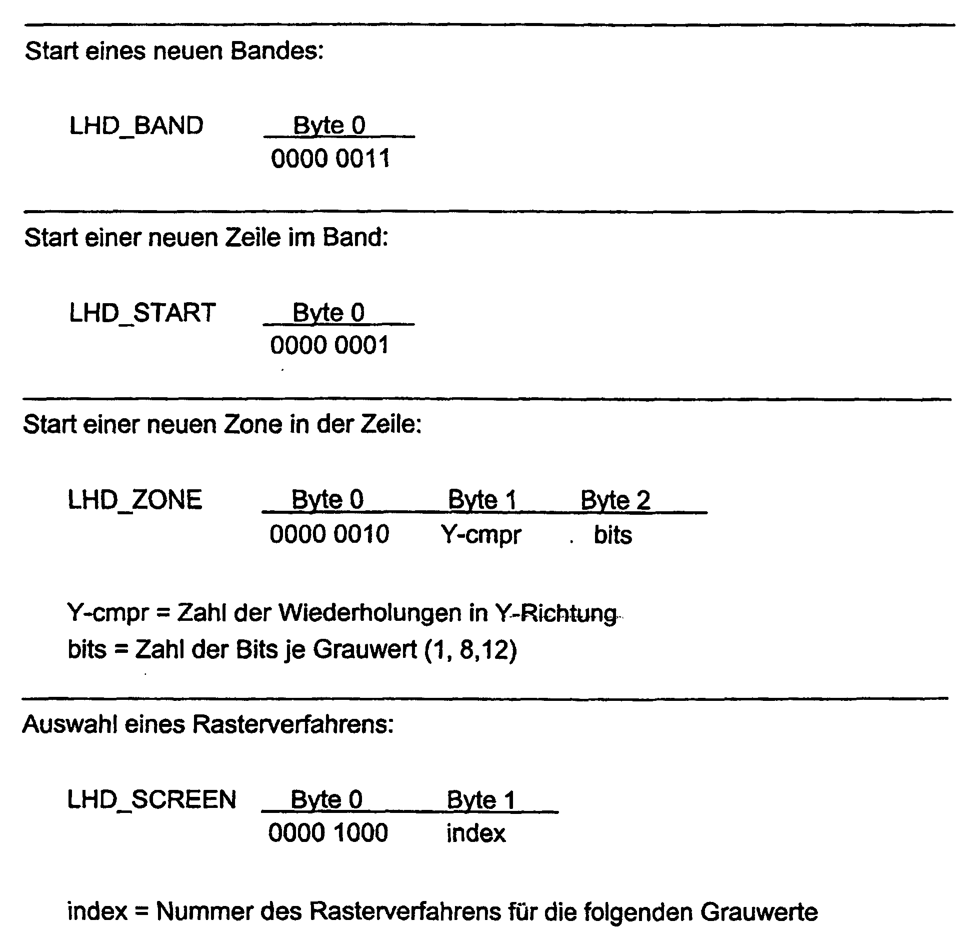

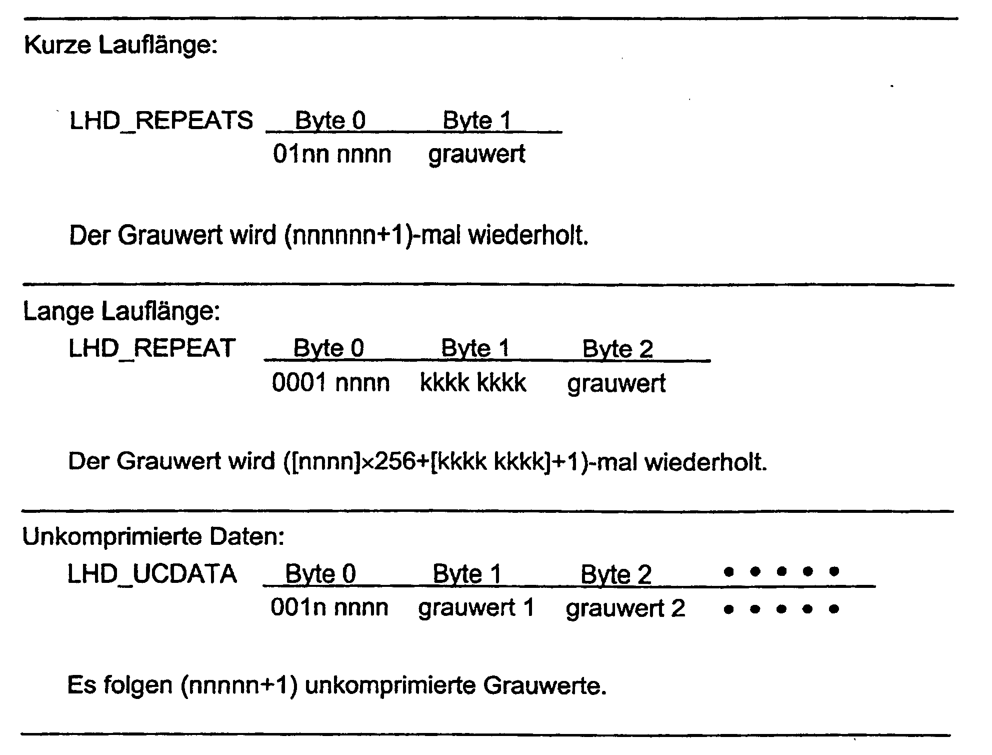

Das erste Byte bzw. die ersten Bits im ersten Byte jedes Kommandos sind ein Kennzeichen dafür, um welches Kommando es sich handelt und wieviele Bytes mit Parametern für das Kommando folgen. Dieser Aufbau stellt sicher, daß bei der Decodierung der Delta-Liste jedes Kommando eindeutig erkannt und richtig interpretiert werden kann.

Jedes neue Band wird mit dem Kommando LHD_BAND und jede neue Zeile innerhalb des Bandes mit dem Kommando LHD_START eingeleitet. Am Anfang jeder Zone in der Zeile steht das Kommando LHD_ZONE, in dem mit dem Parameter "Y-cmpr" codiert ist, über wieviele Zeilen sich der Inhalt dieser Zone in Y-Richtung wiederholt. Aus Gründen einer einfachen und schnellen Verarbeitung wird die Komprimierung in Y-Richtung nur durchgeführt, wenn sich alle Lauflängen in der Zone in den folgenden Zeilen wiederholen, nicht jedoch, wenn sich nur einzelne Lauflängen aus der Zone wiederholen. Der Parameter "bits" gibt an, mit wieviel Bits die Grauwerte innerhalb der Zone codiert sind, z.B. 1 Bit für Schwarz/Weiß-Information, 8 Bit für Contone-Information mit normaler Stufung (256 Stufen) und 12 Bit für Contone-Information mit feinerer Stufung (4096 Stufen).

Mit dem Kommando LHD_SCREEN wird ein Rasterverfahren ausgewählt, das durch den Parameter "index" gekennzeichnet ist. Mit dem ausgewählten Rasterverfahren soll der Rastergenerator alle folgenden Grauwerte in der Delta-Liste rastem, bis wieder ein neues Rasterverfahren ausgewählt wird. Die Parameter der Rasterverfahren wie Rasterweite, Rasterwinkel, Rasterpunktform sind unter der Nummer "index" im Rastergenerator gespeichert, oder sie werden der erzeugten Delta-Liste mit weiteren Delta-Listen Kommandos hinzugefügt.

Eine Lauflänge von sich wiederholenden Grauwerten innerhalb einer Zone wird mit den Kommandos LHD_REPEATS oder LHD_REPEAT beschrieben. Im Kommando LHD_REPEATS codiert eine 6 Bit-Binärzahl [nnnnnn] im ersten Byte eine Lauflänge zwischen 1 und 64, im Kommando LHD_REPEAT wird eine Lauflänge zwischen 1 und 4096 durch eine 12 Bit-Binärzahl codiert ([nnnn] im ersten Byte und [kkkk kkkk] im zweiten Byte). Jeweils das letzte Byte dieser Kommandos gibt den Grauwert an, der wiederholt werden soll.

Wenn aufeinanderfolgende Grauwerte in der Zeile nicht gleich sind und deshalb nicht mit einer Lauflänge komprimiert werden können, wird eine solche Sequenz mit dem Kommando LHD_UCDATA beschrieben. Eine 5 Bit-Binärzahl [nnnnn] im ersten Byte gibt an, wieviele unkomprimierte Grauwerte folgen.

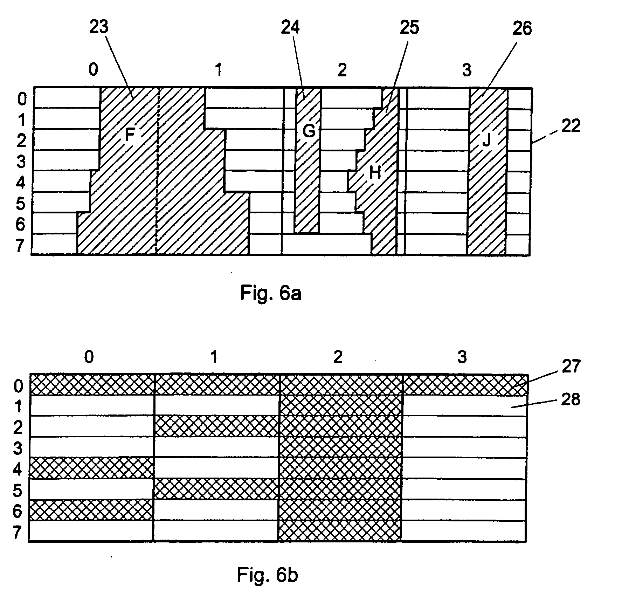

In der Fig. 6a ist ein Bandausschnitt (22) mit vier Zonen je Zeile (numeriert von 0 bis 3) gezeigt. Fig. 6b zeigt, für welche Zonen bei der Erzeugung der Delta-Liste Daten generiert werden und für welche durch die Komprimierung in Y-Richtung keine Daten generiert werden. Der Bandausschnitt (22) in Fig. 6a ist 8 Zeilen hoch (numeriert von 0 bis 7) und enthält die grafischen Objekte F (23), G (24), H (25) und J (26). Das Objekt F (23) erstreckt sich über die Zonen 0 und 1 in jeder Zeile. Bei der Erzeugung der Delta-Liste werden die Lauflängen in diesem Fall jedoch nicht über die ganze Objektbreite bestimmt, sondern innerhalb jeder Zone getrennt und unabhängig von den Nachbarzonen in X-Richtung. Das Objekt F (23) wird also in zwei Teilobjekte unterteilt, eins in Zone 0 und eins in Zone 1. In der Zone 0 sind die Lauflängen in den Zeilen 0 bis 3 gleich. Deshalb werden nur die Lauflängen in der Zeile 0 codiert und in die Delta-Liste eingetragen, wobei im Kommando LHD_ZONE vermerkt wird, daß die Lauflängen auch für die drei folgenden Zeilen dieser Zone gelten. In den Zeilen 1, 2, 3 der Zone 0 brauchen also keine Lauflängen codiert und eingetragen zu werden. Ebenso sind die Lauflängen in den Zeilen 4 und 5 der Zone 0 gleich und in den Zeilen 6 und 7, so daß nur in den Zeilen 4 bzw. 6 Lauflängen erzeugt und der Delta-Liste hinzugefügt werden. Schraffierte Zonen (27) in Fig. 6b kennzeichnen die Zonen, für die Delta-Code erzeugt wird, und nicht-schraffierte Zonen (28) sind solche, für die kein Code erzeugt wird.

Die Lauflängen in der Zone 1 werden unabhängig von denen in der Zone 0 erzeugt, obwohl sie in diesem Fall zum gleichen Objekt F (23) gehören. Nach dem zuvor erläuterten Prinzip der Komprimierung in Y-Richtung werden hier die Lauflängen in den Zeilen 0, 2 und 5 codiert.

In der Zone 2 ergibt sich für jede Zeile eine andere Lauflängenanordnung, so daß für jede der 8 Zeilen Lauflängencode erzeugt wird. Die Lauflängen für das Objekt G (24) sind zwar über die ersten 7 Zeilen gleich, aber das Objekt H (25) hat in jeder Zeile eine andere Lauflängenverteilung. In der Zone 3 ist die Lauflängenverteilung über die ganze Bandhöhe gleich, so daß nur für die erste Zeile Lauflängen erzeugt werden.

Bei der Erzeugung der Delta-Liste werden die Zeilen eines Bandes von oben nach unten abgearbeitet, und die Zonen einer Zeile von links nach rechts. Die erzeugten Kommandos und Lauflängen werden dabei dicht gepackt aneinandergehängt, d.h. für die Zonen, für die keine Lauflängen erzeugt werden, wird nichts in die Delta-Liste eingetragen. Aufgrund des Code für die Komprimierung in Y-Richtung im Kommando LHD_ZONE kann der Rastergenerator die Delta-Liste so decodieren, daß die Lauflängen wieder den richtigen Zonen zugeordnet werden.

### Die Speicherung im Zwischenpuffer

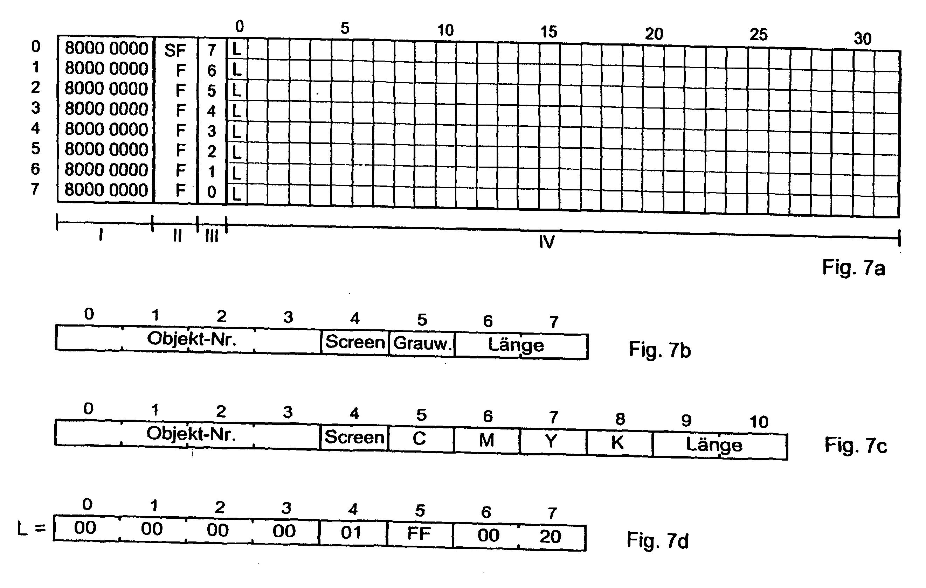

Bei der Generierung der Delta-Liste werden die in der Display-Liste vorgefundenen ersten grafischen Objekte in überlappungsfreie zweite grafische Objekte umgewandelt. Zur Erzeugung der überlappungsfreien zweiten grafischen Objekte wird ein Zwischenpuffer benötigt, in dem die Startpositionen und weitere Parameter der Objekte eingetragen werden. Für jede Zone gibt es einen solchen Zwischenpuffer. Die Organisation des Zwischenpuffers ist in Fig. 7a dargestellt. In dem hier behandelten Beispiel ist wegen einer einfacheren zeichnerischen Darstellung die Zonenbreite zu 32 Pixel angenommen, in einer praktischen Realisierung der Erfindung würden die Zonen jedoch breiter gewählt, z.B. 1024 Pixel.

Der Zwischenpuffer für eine Zone ist in vier Bereiche eingeteilt (I bis IV). Im Bereich I befindet sich eine komprimierte Darstellung einer Zone in Form einer Bit-map, in der für jede Startposition eines Objekts das entsprechende Bit auf "1" gesetzt ist. Als Startposition gilt für jede Zeile der linke Rand des Objekts. Zur kompakteren Darstellung wird der jeweilige Inhalt der Bitmap in Fig. 7a und den folgenden Zeichnungen als Hexadezimalzahlen angegeben, d.h. für je 4 Bit eine Hexadezimalziffer zwischen "0" und "F". Somit beschreiben 8 Hexadezimalziffem die 32 Bit in jeder Zeile des Bereichs I.

Im Bereich II wird eine Statusinformation für die Zeilen der Zone abgelegt. Mögliche Zustände sind z.B. "Frei" (F), "Rechteck" (R) und "Start" (S). Mit "Start" (S) sind die Zeilen der Objekte gekennzeichnet, bei denen ein neues Objekt in Y-Richtung beginnt.

In den Bereich III wird für ein Objekt die Anzahl der Wiederholungen in Y-Richtung eingetragen.

Im Bereich IV wird für jede Startposition eine Datenstruktur abgelegt, wie sie in Fig. 7b gezeigt ist. Die Datenstruktur besteht aus 8 Byte, numeriert von 0 bis 7, und enthält vier Kennzeichnungselemente, nämlich "Objekt-Nummer" (Objekt-Nr.), "Screening" (Screen), "Grauwert" (Grauw.) und "Lauflänge" (Länge). Die "Objekt-Nummer" ist eine fortlaufende Numerierung der in der Delta-Liste eingetragenen Objekte, wobei Objekte mit größeren Nummern solche mit kleineren Nummern überlappen können. Die "Objekt-Nummer" wird in der Datenstruktur als 32 Bit Binärzahl gespeichert und belegt die ersten vier Byte der Datenstruktur. Das Kennzeichnungselement "Screening" belegt das fünfte Byte der Datenstruktur und gibt die Nummer des Rasterverfahrens an, mit dem das jeweilige Objekt gerastert werden soll. Die Parameter der Rasterung sind vom Rastergenerator unter der "Screening"-Nummer abrufbar. Das Kennzeichnungselement "Grauw." im sechsten Byte der Datenstruktur gibt den Grauwert des Objekts an. Die letzen beiden Byte der Datenstruktur geben im Kennzeichnungselement "Länge" die Lauflänge des Objekts in der betreffenden Zeile der Zone als 16 Bit Binärzahl an.

Die Datenstruktur von Fig. 7b gilt für eine Delta-Liste, die eine Druckvorlage mit nur einem Grauwert je Pixel beschreibt, also z.B. für einen Farbauszug. Alternativ kann anstelle eines einzelnen Grauwertes auch ein Farbwert mit einer Anzahl von Farbkomponenten, beispielsweise die Farbauszugswerte C, M, Y und K, angegeben werden. Eine entsprechend modifizierte Datenstruktur für den Bereich IV des Zwischenpuffers zeigt Fig. 7c. In der folgenden Erläuterung des Verfahrens wird jedoch von einer Delta-Liste mit einem Grauwert je Pixel ausgegangen, also mit einer Datenstruktur nach Fig. 7b.

Zu Beginn wird der Zwischenpuffer initialisiert, indem in alle Zeilen ein "leeres Objekt" mit der Datenstruktur "L" nach Fig. 7d eingetragen wird. Die Kennzeichnungselemente der Struktur "L" sind ebenfalls als Hexadezimalzahlen dargestellt. Die "Objekt-Nr." ist Null, für "Screen" wird das Rasterverfahren Nummer 1 eingetragen, der Grauwert ist FFₕₑₓ = 255 (der Wert für Weiß) und die "Länge" ist 20ₕₑₓ = 32 (die Breite der Zone). Die Datenstruktur beschreibt also eine weiße Lauflänge, die sich über die ganze Zonenbreite erstreckt. Diese Datenstruktur für das "leere Objekt" wird in die Spalte 0 des Bereichs IV eingetragen.

Entsprechend wird in allen Zeilen der Bitmap im Bereich I das erste Bit auf "1" gesetzt, d.h. die erste Hexadezimalziffer wird 8ₕₑₓ. Die Bitmap im Bereich I dient als Hilfsmittel, um bei der Erzeugung und Weiterverarbeitung der Delta-Liste die nächste Lauflänge in einer Zone schneller zu finden. Für Abschnitte in der Bitmap, die nur Nullen enthalten ("0"), brauchen die entsprechenden Abschnitte im Bereich IV nicht durchsucht zu werden, und es wird Verarbeitungszeit gespart.

Im Bereich II werden alle Zeilen als "Frei" (F) gekennzeichnet, die erste Zeile zusätzlich als "Start" (S), da sie in Y-Richtung gesehen die Startzeile des "leeren Objekts" ist. Schließlich wird im Bereich III eingetragen, wie oft sich die Lauflänge in der jeweiligen Zeile noch in den folgenden Zeilen wiederholt Die Lauflänge in Zeile 0 wiederholt sich in den 7 folgenden Zeilen, die Lauflänge in Zeile 1 wiederholt sich in den 6 folgenden Zeilen, usw.

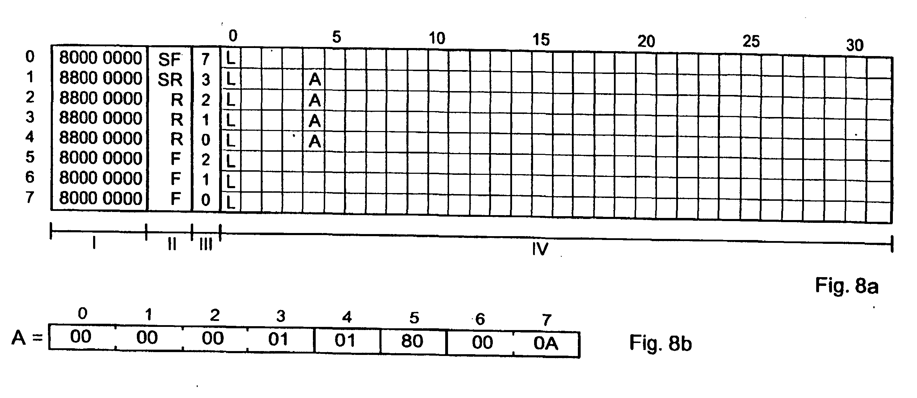

Im folgenden wird anhand der Fig. 8 bis Fig. 12 erläutert, welche Daten jeweils in den Zwischenpuffer eingetragen werden, wenn die in Fig. 3 gezeigten Objekte A bis E (11, 12, 13, 14, 15) aus der Display-Liste der Reihe nach verarbeitet werden.

Wird in einen Zwischenpuffer ein neues Objekt eingetragen, müssen alle Bereiche (I bis IV) aktualisiert werden. Fig. 8a zeigt die Eintragung des Objekts A, das durch die folgenden Parameter gekennzeichnet ist:

| | | |
|---|---|---|
| Objekt A | Objekt-Nummer = 1 | |
| | Screening = 1 | Grauwert = 128 |
| | Start-Koordinate Y = 1 | Höhe = 4 Zeilen |
| | Start-Koordinate X = 4 | Länge = 10 Pixel |

Entsprechend der Lage des Objekts A in der Zone wird in die Spalte 4 der Zeilen 1 bis 4 des Bereichs IV die Datenstruktur A (Fig. 8b) eingetragen. Das Objekt hat die "Objekt-Nr." 1, das "Screening" 1, den "Grauwert" 128 = 80ₕₑₓ und die "Länge" 10 = Aₕₑₓ. Im Bereich I werden die der Spalte 4 entsprechenden Bits in den betroffenen Zeilen gesetzt. Im Bereich II wird in den Zeilen 1 bis 4 der Status "Rechteck" (R) und in Zeile 2 zusätzlich der Status "Start" (S) eingetragen. Im Bereich III wird die Zahl der Wiederholungen in Y-Richtung eingetragen, "3" Wiederholungen in Zeile 1, noch "2" Wiederholungen in Zeile 2, usw.

In dieser Phase der Verarbeitung werden im Bereich III nur die Wiederholungen des zuletzt behandelten Objekts eingetragen, wenn diese Wiederholungen kleiner oder gleich den bereits eingetragenen Wiederholungen sind. Wie später erläutert wird, stellt diese Regel sicher, daß bei der Weiterverarbeitung die Zeilen einer Zone, die sich in allen Lauflängen wiederholen, identifiziert werden können. Daß die in der Zeile 0 zuvor eingetragene Wiederholung "7" nach Eintragung des Objekts A nicht mehr gilt, wird zunächst außer Acht gelassen und in einer späteren Verarbeitungsphase bereinigt.

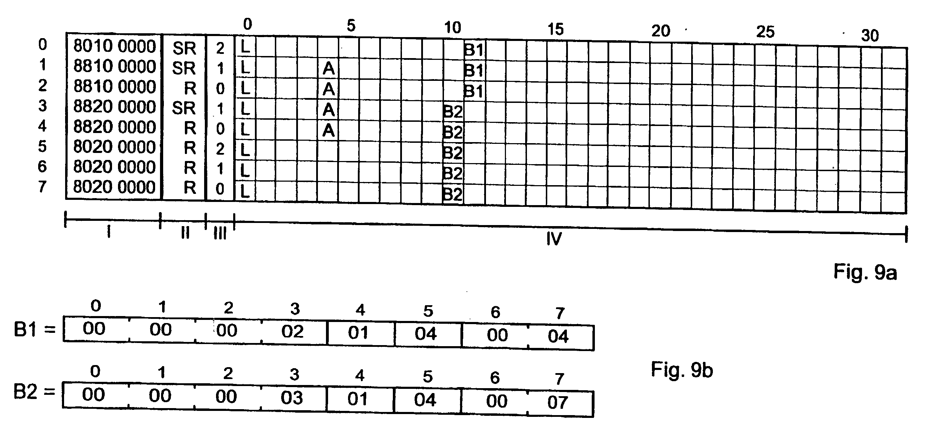

In Fig. 9a ist die Eintragung des Objekts B aus Fig. 3 gezeigt. Da das Objekt eine unregelmäßige Begrenzung am linken und rechten Rand hat, wird es in rechteckige horizontale Streifen unterteilt, die als getrennte Teilobjekte in den Zwischenpuffer eingetragen werden. Alle Teilobjekte sollen das gleiche "Screening" (= 1) und den gleichen "Grauwert" (= 4) haben, nur der Startpunkt sowie die Höhe und Länge der Teilobjekte ist unterschiedlich. Da aus dem ursprünglichen Objekt B nun zwei neue Objekte B1 und B2 entstehen, erhalten sie fortlaufend neue "Objekt-Nummern" 2 und 3. Damit ergeben sich folgende Parameter für die beiden Teilobjekte B1 und B2:

| | | |
|---|---|---|
| Objekt B1 | Objekt-Nummer = 2 | |
| | Screening = 1 | Grauwert = 4 |
| | Start-Koordinate Y = 0 | Höhe = 3 Zeilen |
| | Start-Koordinate X = 11 | Länge = 4 Pixel |

| | | |
|---|---|---|
| Objekt B2 | Objekt-Nummer = 3 | |
| | Screening = 1 | Grauwert = 4 |
| | Start-Koordinate Y = 3 | Höhe = 5 Zeilen |
| | Start-Koordinate X = 10 | Länge = 7 Pixel |

Fig. 9b zeigt die Datenstrukturen für die Teilobjekte, die in den Bereich IV des Zwischenpuffers eingetragen werden. Die Eintragungen in die Bereiche I und III erfolgen entsprechend den beim Objekt A erläuterten Regeln. Für das Objekt B1 werden in den Zeilen 0 bis 2 die Wiederholungen "2", "1" und "0" eingetragen. Für das Objekt B2 werden in den Zeilen 3 und 4 jedoch nicht die Wiederholungen "4" und "3" eingetragen, da diese Wiederholungen größer sind als die bereits vorhandenen Wiederholungen "1" und "0", die noch vom Objekt A stammen. In den Zeilen 5 bis 7 werden für das Objekt B2 aber die Wiederholungen "2", "1" und "0" eingetragen, wodurch sich der Inhalt des Bereichs III in diesen Zeilen aber nicht ändert, da diese Wiederholungen schon vom "Leeren Objekt" L eingetragen wurden. Im Bereich II werden wie bereits erläutert für die neuen Objekte die Statusinformationen "S" und "R" eingetragen, wobei aber in Zeile 1 der Status "S" des früher eingetragenen Objekts A nicht gelöscht wird.

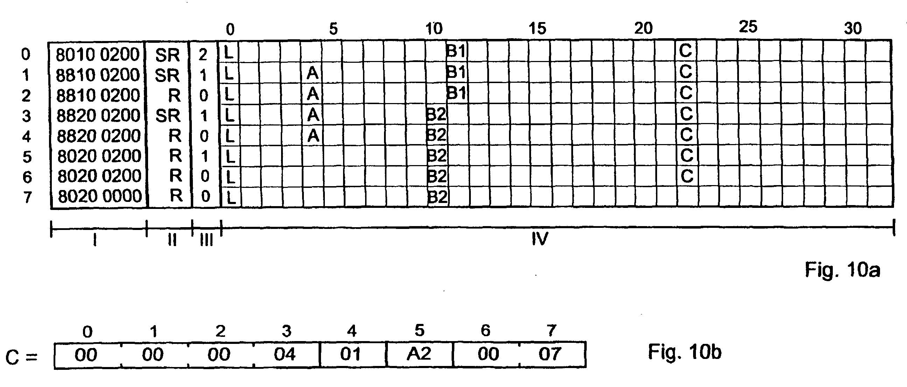

In der Fig. 10a ist die Eintragung des nächsten Objekts C aus Fig. 3 gezeigt. Fig. 10b zeigt die zu dem Objekt gehörende Datenstruktur. Das Objekt hat die "Objekt-Nummer" 4 und soll das "Screening" 1 und den "Grauwert" 162 = A2ₕₑₓ haben. Die Parameter des Objekts sind:

| | | |
|---|---|---|
| Objekt C | Objekt-Nummer = 4 | |
| | Screening = 1 | Grauwert = 162 |
| | Start-Koordinate Y = 0 | Höhe = 7 Zeilen |
| | Start-Koordinate X = 22 | Länge = 7 Pixel |

Die Eintragung der Datenstruktur (Fig. 10b) und der übrigen Kennzeichnungen in die Bereiche des Zwischenpuffers erfolgt nach den zuvor erläuterten Regeln.

Als nächstes müssen die Objekte D und E aus Fig. 3 in den Zwischenpuffer eingetragen werden. Hierbei tritt der Sonderfall auf, daß die Startpunkte der neuen Objekte auf bereits belegte Startpunkte im Zwischenpuffer fallen (belegt durch das Objekt C). Dabei werden zwei Fälle unterschieden, je nachdem ob das neue Objekt länger oder gleich lang wie das bereits eingetragene Objekt ist (Fall 1) oder ob es kürzer ist (Fall 2). Der Fall 1 wird durch das neue Objekt D repräsentiert, der Fall 2 durch das Objekt E.

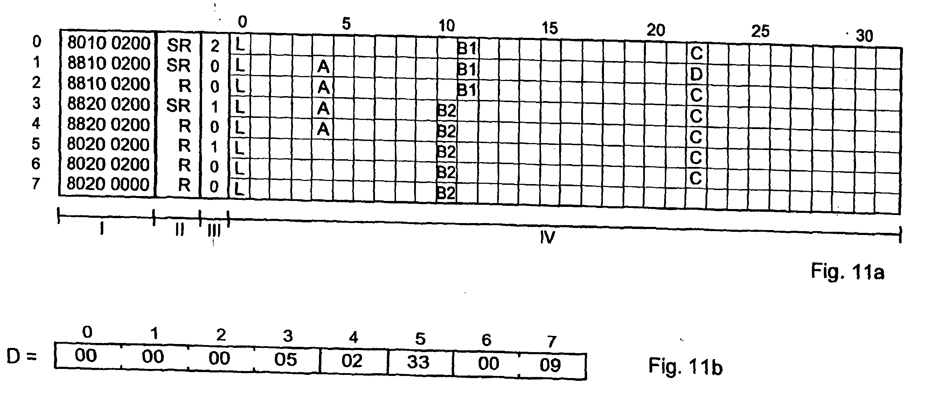

Fig. 11a zeigt die Eintragung des Objekts D und Fig. 11b die zugehörige Datenstruktur. Das Objekt bekommt die laufende "Objekt-Nummer" 5 und soll das "Screening" 2 und den "Grauwert" 51 = 33ₕₑₓ haben. Seine Parameter sind somit:

| | | |
|---|---|---|
| Objekt D | Objekt-Nummer = 5 | |
| | Screening = 2 | Grauwert = 51 |
| | Start-Koordinate Y = 1 | Höhe = 1 Zeile |
| | Start-Koordinate X = 22 | Länge = 9 Pixel |

In diesem Fall 1, da das neue Objekt D länger als das bereits eingetragene Objekt C ist, wird in der Zeile 1 des Zwischenpuffers der vorhandene Startpunkt für das Objekt C durch den neuen Startpunkt für das Objekt D überschrieben. Da das neue Objekt D in dieser Zeile das darunterliegende Objekt C vollständig überdeckt und deshalb Objekt C bei der Ausgabe der Druckvorlage nicht erscheint (in dieser Zeile der Zone), braucht die Information für Objekt C nicht aufgehoben zu werden.

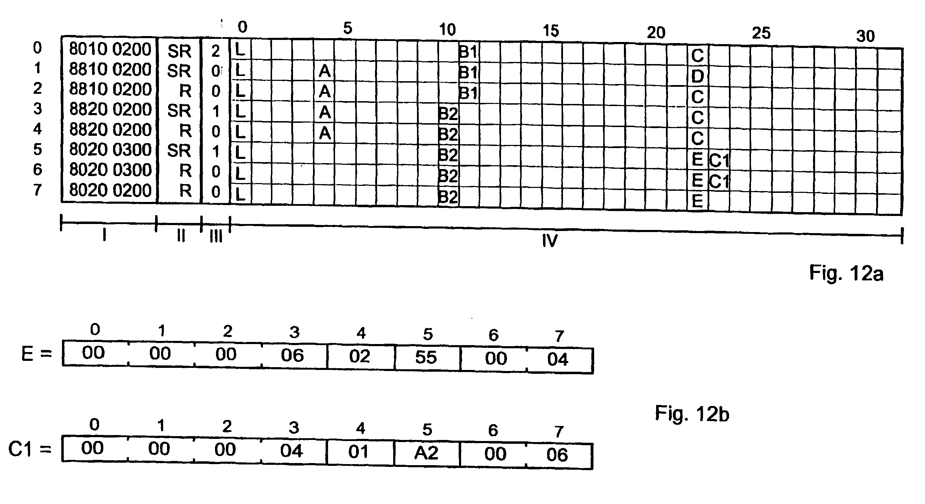

Fig. 12a zeigt mit der Eintragung des Objekts E ein Beispiel für den Fall 2, daß das neue Objekt kürzer als das bereits eingetragene Objekt C ist und es deshalb nur teilweise überdeckt. Fig. 12b zeigt die Datenstrukturen, die in diesem Fall gebraucht werden. Das Objekt bekommt die laufende "Objekt-Nummer" 6 und soll das "Screening" 2 und den "Grauwert" 85 = 55ₕₑₓ haben. Seine Parameter sind somit:

| | | |
|---|---|---|
| Objekt E | Objekt-Nummer = 6 | |
| | Screening = 2 | Grauwert = 85 |
| | Start-Koordinate Y = 5 | Höhe = 3 Zeilen |
| | Start-Koordinate X = 22 | Länge = 4 Pixel |

Da in diesem Fall die Information des Objekts C in den Zeilen 5 und 6 des Zwischenpuffers noch für die Ausgabe der Druckvorlage gebraucht wird, werden die dort eingetragenen Startpunkte um eine Position nach rechts verschoben, wobei die Länge des Objekts C in diesen Zeilen um ein Pixel gekürzt werden muß, damit der rechte Rand des Objekts C nicht verfälscht wird. Das bedeutet, daß in den Zeilen 5 und 6 das Objekt C durch ein neues Objekt C1 ersetzt wird, daß um ein Pixel nach rechts verschoben ist und gleichzeitig um ein Pixel kürzer ist. Die "Objekt-Nummer", das "Screening" und der "Grauwert" für das Objekt C1 werden vom Objekt C übernommen (Fig. 12b). Es hat somit die Parameter:

| | | |
|---|---|---|
| Objekt C1 | Objekt-Nummer = 4 | |
| | Screening = 1 | Grauwert = 162 |
| | Start-Koordinate Y = 5 | Höhe = 2 Zeilen |
| | Start-Koordinate X = 23 | Länge = 6 Pixel |

Die "Objekt-Nummer" muß die gleiche sein wie für das Objekt C, damit Objekt C1 zusammen mit dem Rest des Objekts C in der gleichen Überlappungsebene die gleiche Fläche beschreibt wie das ursprüngliche Objekt C. Nach der Eintragung des Objekts C1 kann auch das neue Objekt E in den Zwischenpuffer eingetragen werden, da nun die dafür benötigten Positionen im Zwischenpuffer frei sind. Wenn die verschobene Startposition von Objekt C1 ebenfalls auf eine Position fällt, die im Zwischenpuffer bereits belegt ist, wird das Objekt C1 weiter schrittweise nach rechts verschoben (und entsprechend gekürzt), bis eine freie Position im Zwischenpuffer angetroffen wird, in die das Objekt C1 eingetragen werden kann.

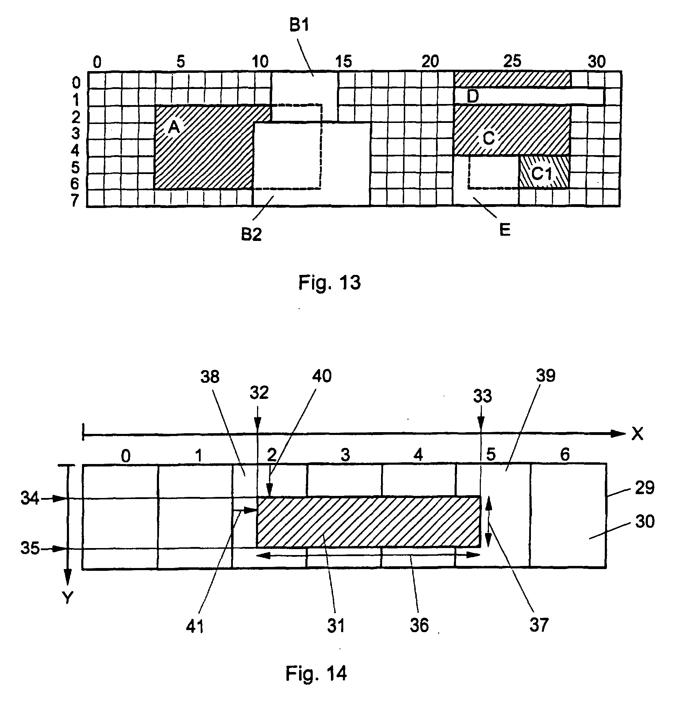

In Fig. 13 sind noch einmal alle in den Zwischenpuffer eingetragenen Objekte zusammen dargestellt.

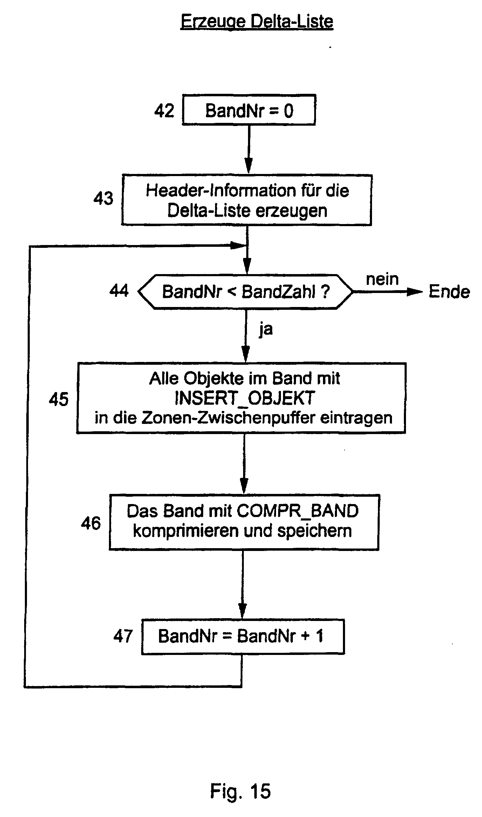

Der bisher beschriebene Ablauf des Verfahrens zur Eintragung der in der Display-Liste vorgefundenen ersten Objekte in den Zwischenpuffer wird zum besseren Verständnis noch einmal anhand von Ablaufdiagrammen (Fig. 15 bis Fig. 19) näher erläutert. Dabei wird von dem allgemeinen Fall in Fig. 14 ausgegangen.

Fig. 14 zeigt ein Band (29) mit in diesem Beispiel sieben Zonen (30), numeriert von 0 bis 6, in dem sich ein Objekt (31) über mehrere Zonen erstreckt. Das Objekt hat bezüglich des Bandanfangs (linke obere Ecke des Bandes) die Koordinaten "Xstart" (32), "Xende" (33), "Ystart" (34) und "Yende" (35). Es hat die Länge "Xrange" (36) und die Höhe "Yrange" (37), beginnt in der "StartZone" 2 (38) und endet in der "EndeZone" 5 (39). Die Startkoordinaten bezüglich der linken oberen Ecke der "StartZone" (38) sind "Xobjekt" (41) und "Yobjekt" (40), wobei "Yobjekt" = "Ystart" gilt.

Im Ablaufdiagramm Fig. 15 sind die Hauptschritte zur Erzeugung einer Delta-Liste für eine Druckvorlage gezeigt. Da die Delta-Liste Band für Band von oben nach unten erzeugt wird, wird im Schritt (42) zunächst die "BandNr" auf Null gesetzt.

Danach wird im Schritt (43) Header-Information für die Delta-Liste erzeugt und abgespeichert. Die Header-Information, enthält z.B. Parameter, wie die Anzahl und Höhe der Bänder, die Anzahl und Breite der Zonen, die Auflösung in X- und Y-Richtung, eine Job-Identifikation und andere allgemeingültige Informationen. Im Schritt (44) wird geprüft, ob die Nummer des nächsten zu bearbeitenden Bandes kleiner als die Anzahl der Bänder ist. Wenn das der Fall ist, ist die Vorlage noch nicht zu Ende bearbeitet, andernfalls ist die Bearbeitung beendet.

Im Schritt (45) werden alle im Band vorgefundenen Objekte mit den unter "INSERT_OBJEKT" zusammengefaßten Verfahrensschritten in die Zonen-Zwischenpuffer eingetragen. Anschließend werden im Schritt (46) die in die Zonen-Zwischenpuffer eingetragenen Lauflängen mit den unter "COMPR_BAND" zusammengefaßten Verfahrensschritten komprimiert, in das Format der Delta-Liste umgewandelt und abgespeichert. Danach wird im Schritt (47) die "BandNr" um Eins erhöht und zur Abfrage (44) zurückgesprungen, um zu prüfen ob die Bearbeitung nun beendet ist.

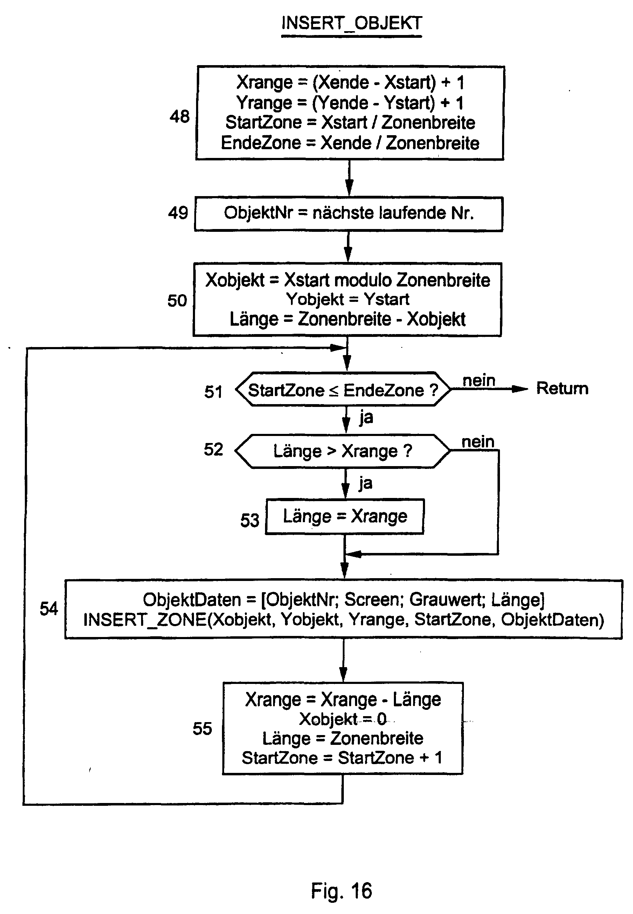

Die Fig. 16 zeigt die Verfahrensschritte, die in Fig. 15 unter "INSERT_OBJEKT" zusammengefaßt wurden. Im Schritt (48) wird die Länge "Xrange" und die Höhe "Yrange" aus den Koordinaten der Eckpunkte des Objekts berechnet. Außerdem wird durch ganzzahlige Division durch die Zonenbreite ermittelt, in welcher "StartZone" das Objekt beginnt und in welcher "EndeZone" es endet.

Im Schritt (49) wird dem Objekt die nächste laufende Objektnummer zugewiesen. Im Schritt (50) werden die Koordinaten des Objektanfangs (linke obere Ecke) "Xobjekt" und "Yobjekt" bezogen auf den Anfang der "StartZone" ermittelt sowie die Länge des Teils des Objekts ("Länge"), der in der "StartZone" liegt.

In der Verarbeitungsschleife (51) bis (55) wird das Objekt entsprechend den Zonen zwischen "StartZone" und "EndeZone" in Teilobjekte unterteilt, wobei jeder Zone ein Teilobjekt zugeordnet ist. Für jedes Teilobjekt wird seine Teillänge ("Länge") und seine X-Koordinate ("Xobjekt") bezogen auf den linken Rand der Zone bestimmt. In der Abfrage (51) wird geprüft, ob die "StartZone" kleiner oder gleich der "EndeZone" ist. Wenn ja, wird das Eintragen des Objekts in den Zwischenpuffer fortgesetzt, wenn nein, ist die Eintragung beendet. Die Prüfung in der Abfrage (52), ob die zuletzt ermittelte Teillänge des Objekts ("Länge") größer als die ursprüngliche Länge des Objekts ("Xrange") ist, ist z.B. für den Fall erforderlich, daß sich der linke und der rechte Rand des Objekts in derselben Zone befinden. Dann wäre die im Schritt (50) ermittelte Teillänge ("Länge") zu groß und würde im Schritt (53) auf die tatsächliche Objektlänge begrenzt. Die Abfrage (52) und der Schritt (53) begrenzen auch die Teillänge "Länge" auf die Restlänge des Objekts, wenn das in der "EndeZone" liegende Teilobjekt verarbeitet wird.

Im Schritt (54) wird die Datenstruktur "ObjektDaten", wie sie in Fig. 7b bereits erläutert wurde, für das gerade behandelte Teilobjekt aus den Parametern "ObjektNr", "Screen", "Grauwert" und "Länge" gebildet. Das Eintragen des Teilobjekts in die betroffenen Zeilen der aktuellen Zone ist unter "INSERT_ZONE" zusammengefaßt. "INSERT_ZONE" verwendet als Parameter die Anfangskoordinaten des Teilobjekts ("Xobjekt", "Yobjekt"), die Höhe ("Yrange"), die Nummer der aktuellen Zone ("StartZone") und die Datenstruktur ("ObjektDaten").

Im Schritt (55) wird die Verarbeitung des nächsten Teilobjekts vorbereitet. Die (Rest)-Länge des Objekts ("Xrange") wird um die gerade eingetragene Teillänge ("Länge") gekürzt, die X-Koordinate ("Xobjekt") wird auf Null gesetzt, die Teillänge ("Länge") wird gleich der Zonenbreite gesetzt, und die Nummer der Zone ("StartZone") wird um Eins erhöht. Anschließend springt die Verarbeitung zur Abfrage (51) zurück.

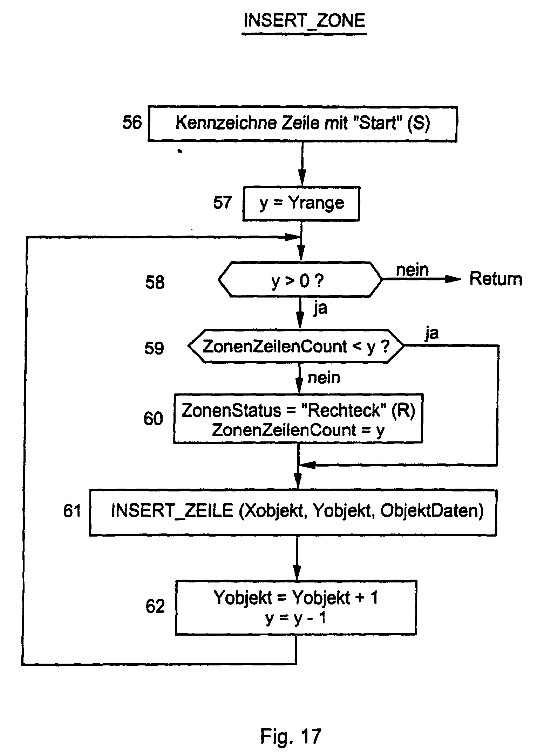

Die Fig. 17 zeigt die Verfahrensschritte, die in Fig. 16 unter "INSERT_ZONE" zusammengefaßt wurden. "INSERT_ZONE" trägt in einer Verarbeitungsschleife die Datenstruktur "ObjektDaten" und die weiteren Kennzeichen Zeile für Zeile in die Bereiche I bis IV des Zwischenpuffers für die aktuelle Zone ein.

Im Schritt (56) wird die erste Zeile des Teilobjekts im Bereich II mit "Start" (S) gekennzeichnet. Im Schritt (57) wird zur Steuerung des Schleifenablaufs eine Variable "y" zum Abzählen der Zeilen auf "Yrange" gesetzt. In der Abfrage (58) wird geprüft, ob noch Zeilen einzutragen sind. Wenn nein, ist die Verarbeitung beendet. Wenn ja, wird in der Abfrage (59) geprüft, ob der im Zwischenpuffer bereits vorhandene Wert für "ZonenZeilenCount" kleiner als "y" ist. Ist das der Fall, darf er nicht durch größere Werte überschrieben werden, wie bereits im Zusammenhang mit Fig. 8 und Fig. 9 erläutert wurde, da sonst später die Wiederholung ganzer Zonenzeilen nicht richtig erkannt wird. Wenn der vorhandene Wert für "ZonenZeilenCount" größer oder gleich "y" ist, wird im Schritt (60) für den "ZonenStatus" im Bereich II des Zwischenpuffers "Rechteck" (R) eingetragen und der "ZonenZeilenCount" wird auf "y" gesetzt.

Im Schritt (61) wird dann die Datenstruktur "ObjektDaten" in die durch die Koordinaten ("Xobjekt", "Yobjekt") festgelegte Position des Bereichs IV im Zwischenpuffer eingetragen. Dieser Vorgang ist unter "INSERT_ZEILE" zusammengefaßt. Im Schritt (62) wird zur Vorbereitung für die nächste Zeile die Y-Koordinate "Yobjekt" um Eins erhöht und der Zeilenzähler "y" um Eins heruntergezählt. Danach springt die Verarbeitung zur Abfrage (58) zurück.

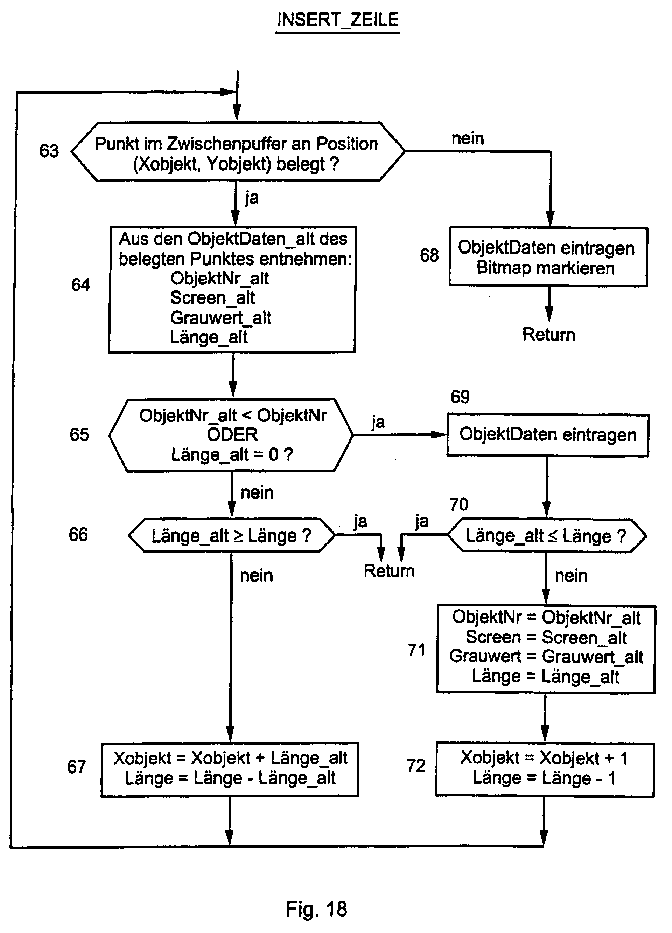

Die Fig. 18 zeigt die Verfahrensschritte, die in Fig. 17 unter "INSERT_ZEILE" zusammengefaßt wurden. In der Abfrage (63) wird zunächst geprüft, ob die Position an den Koordinaten ("Xobjekt", "Yobjekt") im Zwischenpuffer bereits mit einer Datenstruktur belegt ist. Wenn nein, wird im Schritt (68) die Datenstruktur "ObjektDaten" im Bereich IV eingetragen und die entsprechende Position in der Bitmap im Bereich I markiert.

Wenn an der aktuellen Position bereits eine Datenstruktur eingetragen ist, werden im Schritt (64) die Parameter dieser vorhandenen Struktur in den Variablen "ObjektNr_alt", "Screen_alt", "Grauwert_alt" und "Länge_alt" gespeichert. Anschließend wird mit der Abfrage (65) untersucht, ob die "ObjektNr" des neuen Objekts größer als die des alten Objekts ist, ob das neue Objekt das alte also überdeckt, oder ob die "Länge" des alten Objekts durch Verschieben und Kürzen gleich Null geworden ist, d.h. das alte Objekt herausfällt. In beiden Fällen werden im Schritt (69) die "ObjektDaten" in den Bereich IV eingetragen. Die Bitmap wird nicht verändert, da die aktuelle Position noch vom alten Objekt her markiert ist.

Nach der Eintragung der "ObjektDaten" wird in der Abfrage (70) geprüft, ob die "Länge" des alten Objekts kleiner oder gleich der des neuen Objekts ist. Wenn ja, überdeckt das neue Objekt in dieser Zeile das alte Objekt vollständig, und es ist nichts weiter zu tun. Dieser Fall wurde bereits zuvor am Beispiel des Objekts D in Fig. 11 erläutert. Wenn das neue Objekt kürzer als das alte ist, wird das alte Objekt um eine Position nach rechts verschoben und zugleich um ein Pixel gekürzt. Mit diesen Veränderungen wird daraus ein weiteres neues Objekt gebildet. Dazu werden im Schritt (71) die Parameter des alten Objekts in das weitere neue Objekt übernommen, und im Schritt (72) wird als X-Koordinate ("Xobjekt") des weiteren neuen Objekts die um Eins erhöhte des alten Objekts gebildet und seine "Länge" um Eins gekürzt. Dies wurde bereits zuvor am Beispiel des Objekts C1 in Fig. 12 erläutert. Anschließend springt die Verarbeitung zur Abfrage (63) zurück, so daß das um eine Position verschobene und gekürzte alte Objekt als weiteres neues Objekt in den Zwischenpuffer eingetragen werden kann.

Wenn als Ergebnis der Abfrage (65) das neue Objekt auf ein altes Objekt trifft, dessen "ObjektNr" nicht kleiner als die neue "ObjektNr" ist, das es also nicht überdecken darf, sind in der Abfrage (66) wiederum zwei Fälle zu prüfen (ein solches neues Objekt kann durch den oben beschriebenen Vorgang des Verschiebens und Kürzens entstehen). Ist das alte Objekt länger oder gleich lang wie das neue, wird das neue Objekt vollständig von dem alten überdeckt, und es ist nichts weiter zu tun. Ist das alte Objekt kürzer als das neue, ragt eine Restlänge des neuen Objekts über das alte hinaus, und das neue Objekt wird im Schritt (67) auf diese Restlänge gekürzt und seine X-Koordinate "Xobjekt" entsprechend verschoben. Anschließend springt die Verarbeitung zur Abfrage (63) zurück, so daß das verschobene und gekürzte neue Objekt in den Zwischenpuffer eingetragen werden kann.

### Die Erzeugung der Delta-Liste

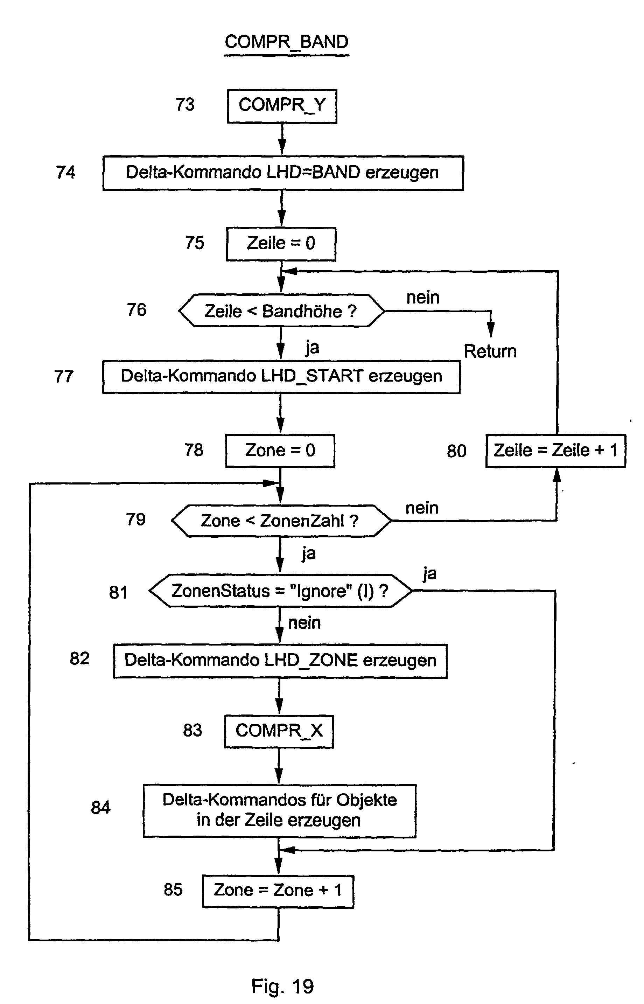

Nach der Aufbereitung und Eintragung der Objekte in die Zonen-Zwischenpuffer eines Bandes, werden in den folgenden Verfahrensschritten die Daten im Zwischenpuffer in Y-Richtung und in X-Richtung komprimiert und im Format der Delta-Liste codiert und abgespeichert. Dabei werden zugleich die Überlappungen der Objekte beseitigt, so daß die Delta-Liste nur noch Objekte enthält, die nahtlos aneinandergefügt die zu belichtende Druckvorlage beschreiben. Diese Verfahrensschritte waren in Fig. 15 unter "COMPR_BAND" zusammengefaßt worden. Sie werden anhand des Ablaufdiagramms in Fig. 19 erläutert.

Die Verarbeitung in einem Band erfolgt Zeile für Zeile von oben nach unten und innerhalb jeder Zeile Zone für Zone von links nach rechts. Im Schritt (73) werden zunächst alle Zonen im Zwischenpuffer ermittelt und gekennzeichnet, die sich in Y-Richtung gegenüber der entsprechenden Zone in der vorangegangenen Zeile nicht verändert haben. Dieser Arbeitsgang ist unter "COMPR_Y" zusammengefaßt und wird später ausführlich erläutert.

Im Schritt (74) wird das Delta-Kommando LHD_BAND erzeugt und in der Delta-Liste abgespeichert, mit dem der Beginn eines Bandes gekennzeichnet ist. Dann wird im Schritt (75) ein Zeilenzähler "Zeile" auf Null gesetzt und in der Abfrage (76) geprüft, ob der Zeilenzähler noch innerhalb der Bandhöhe ist. Wenn nein, ist die Verarbeitung beendet, wenn ja, wird im Schritt (77) das Delta-Kommando LHD_-START erzeugt und in der Delta-Liste abgespeichert, das den Beginn einer Zeile kennzeichnet. Dann wird im Schritt (78) ein Zonenzähler "Zone" auf Null gesetzt, der die Zonen innerhalb der Zeile abzählt. Wenn in der Abfrage (79) festgestellt wird, daß das Ende der Zeile erreicht ist, wird im Schritt (80) der Zeilenzähler um Eins erhöht und zum Schritt (76) zurückgesprungen.

Andernfalls geht es zur Abfrage (81) weiter, in der geprüft wird, ob in der aktuellen Zone der "Zonenstatus" auf "Ignore" (I) gesetzt ist. Der "ZonenStatus" wird während der Ausführung von "COMPR_Y" für die Zonen im Zwischenpuffer auf "Ignore" (I) gesetzt, die keine Veränderung in Y-Richtung gegenüber der vorangegangenen Zeile aufweisen und die mit der Komprimierung in Y-Richtung erfaßt werden. Das sind die Zonen, die in Fig. 6b leergelassen sind, für die also keine Delta-Kommandos erzeugt werden. Deshalb können sie bei der nachfolgenden überlappungsfreien Komprimierung der Objekte in der Zeile ignoriert werden. Wenn der "ZonenStatus" gleich "Ignore" (I) ist, wird im Schritt (85) der Zonenzähler "Zone" um eins erhöht und zur Abfrage (79) zurückgegangen.

Wenn der "ZonenStatus" nicht auf "Ignore" (I) gesetzt ist, wird im Schritt (82) das Delta-Kommando LHD_ZONE erzeugt und in der Delta-Liste abgespeichert, das den Beginn einer Zone kennzeichnet und in dem auch codiert ist, über wieviele nachfolgende Zeilen sich der Inhalt der Zone wiederholt. Anschließend werden im Schritt (83) die im Zwischenpuffer eingetragenen Objekte der Zone in X-Richtung überlappungsfrei komprimiert, was unter "COMPR_X" zusammengefaßt ist und später ausführlich erläutert wird. Schließlich werden für die nun überlappungsfreien Objekte der Zeile im Schritt (84) die entsprechenden Delta-Kommandos erzeugt und in der Delta-Liste abgespeichert. Dazu gehört auch der Vergleich des aktuell gültigen "Screening" mit dem Parameter "Screen" in den "ObjektDaten" und wenn erforderlich die Ausgabe eines neuen Delta-Kommandos "LHD_SCREEN".

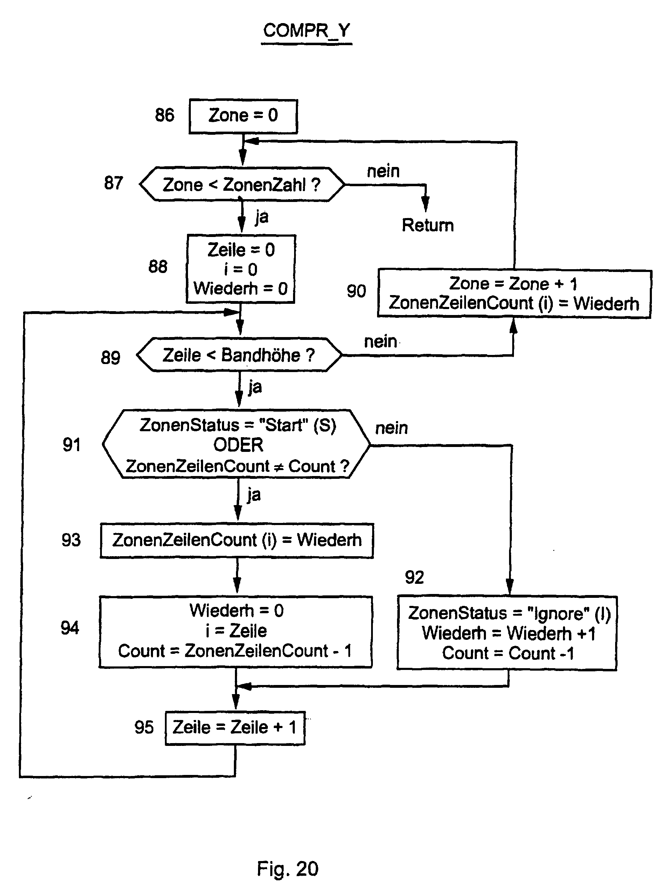

Die Fig. 20 zeigt die unter "COMPR_Y" zusammengefaßten Verarbeitungsschritte, mit denen die Zonen im Zwischenpuffer ermittelt und gekennzeichnet werden, die sich in Y-Richtung gegenüber der entsprechenden Zone in der vorangegangenen Zeile nicht verändert haben. Die Verarbeitung erfolgt hierbei fortschreitend Zone für Zone von links nach rechts und in jeder Zone Zeile für Zeile von oben nach unten.

Im Schritt (86) wird ein Zonenzähler "Zone" auf Null gesetzt, und in der Abfrage (87) wird geprüft, ob der Zonenzähler noch innerhalb des Bandes ist. Wenn nein, ist die Verarbeitung beendet, wenn ja, wird im Schritt (88) ein Zeilenzähler "Zeile" auf Null gesetzt, der die Zeilen innerhalb der Zone abzählt. Ein zweiter Zeilenzähler "i" und ein Wiederholungszähler "Wiederh" werden ebenfalls auf Null gesetzt Der Wiederholungszähler "Wiederh" zählt, wie oft sich eine Zone in den Folgezeilen wiederholt, und der Zeilenzähler "i" markiert jeweils die Zeile im Zwischenpuffer, in die die Zahl der Wiederholungen eingetragen werden soll. Das ist jeweils die erste Zeile einer ermittelten Folge von Wiederholungen.

In der Abfrage (89) wird geprüft, ob die aktuelle Zeile noch innerhalb der Bandhöhe ist. Wenn nein, wird im Schritt (90) der Zonenzähler "Zone" um Eins erhöht und im "ZonenZeilenCount" im Bereich III des Zwischenpuffers in der Anfangszeile "i" der zuletzt ermittelten Folge von Wiederholungen die gefundene Wiederholungszahl eingetragen. Dann springt die Verarbeitung zur Abfrage (87) zurück.

Wenn die aktuelle Zeile noch in der Bandhöhe liegt, wird in der Abfrage (91) geprüft, ob im Bereich II des Zwischenpuffers der Status "Start" (S) eingetragen ist oder ob der im Bereich III vorgefundene "ZonenZeilenCount" nicht mit einer Zählvariablen "Count" übereinstimmt, die synchron zum vorgefundenen "ZonenZeilenCount" heruntergezählt wird (im Schritt (92)). Der Status "Start" (S) kennzeichnet den Beginn eines neuen Objekts, d.h. die entsprechende Zeile kann deshalb keine Wiederholung der vorangegangenen Zeile sein. Die Nichtübereinstimmung von "ZonenZeilenCount" und "Count" kennzeichnet eine Unterbrechung der Wiederholungen in Y-Richtung. Beide Bedingungen kennzeichnen daher Zeilen, in denen eine Folge von Wiederholungen beendet ist und möglicherweise eine neue Folge beginnt.

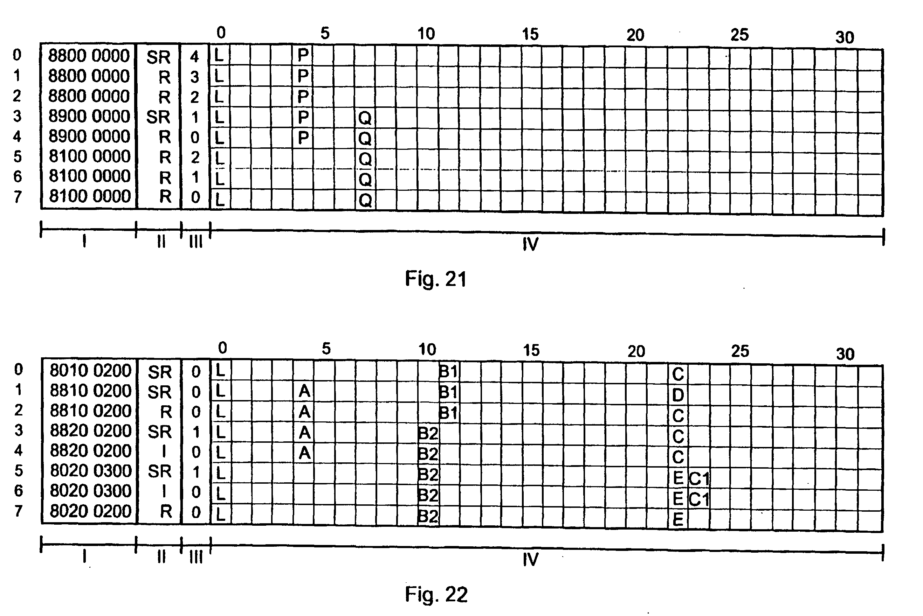

Dies ist noch einmal in einem einfachen Beispiel in Fig. 21 gezeigt. Ein Objekt P erstreckt sich über die Zeilen 0 bis 4. Deshalb wurde beim Eintragen des Objekts in den Zwischenpuffer in Zeile 0 des Bereichs II der "ZonenStatus" "Start" (S) gesetzt und in den Zeilen 0 bis 4 des Bereichs III der "ZonenZeilenCount" 4 bis 0 eingetragen. Ein zweites Objekt Q erstreckt sich über die Zeilen 3 bis 7. Deshalb wurde in Zeile 3 der "ZonenStatus" "Start" (S) gesetzt. Der "ZonenZeilenCount" in den Zeilen 3 bis 7 hätte für dieses Objekt ebenfalls von 4 bis 0 laufen müssen, wenn in den Zeilen 3 und 4 nicht schon ein "ZonenZeilenCount" für das Objekt P eingetragen worden wäre. Da der für das Objekt P eingetragene "ZonenZeilenCount" kleiner ist als die für das Objekt Q geltenden Werte, wird der "ZonenZeilenCount" in den Zeilen 3 und 4 nicht überschrieben und nur in den Zeilen 5 bis 7 eingetragen. Dies wurde im Zusammenhang mit dem Verarbeitungsschritt (59) in Fig. 17 bereits erläutert. Die Zeilen, in denen eine Veränderung der Objekte im Vergleich zur vorangegangenen Zeile auftritt, sind im Beispiel von Fig. 21 die Zeilen 0 und 3, in denen jeweils ein neuen Objekt beginnt und die durch den "ZonenStatus" "Start" (S) gekennzeichnet sind, und die Zeile 5, in der das Objekt P wegfällt. Die letztere Veränderung wird durch den Vergleich von "ZonenZeilenCount" und "Count" in der Abfrage (91) in Fig. 20 erkannt.

Wenn die Abfrage (91) ergibt, daß in der aktuellen Zeile keine Veränderung gegenüber der vorangegangenen Zeile aufgetreten ist, wird im Schritt (92) der "ZonenStatus" "Ignore" (I) im Bereich II des Zwischenpuffers eingetragen, der Wiederholungszähler "Wiederh" um Eins erhöht und der "Count" um Eins verringert. Anschließend wird im Schritt (95) der Zeilenzähler "Zeile" um Eins erhöht und zur Abfrage (89) zurückgesprungen.

Wenn in der Abfrage (91) eine Veränderung gegenüber der vorangegangenen Zeile festgestellt wird, wird im Schritt (93) in den "ZonenZeilenCount" der Zeile "i" die Zahl der ermittelten Wiederholungen eingetragen. Der Zeilenzähler "i" zeigt immer auf die Zeile, in der die aktuelle Folge von Wiederholungen begonnen hat. Im Schritt (94) wird die nächste (mögliche) Folge von Wiederholungen vorbereitet, indem der Wiederholungszähler "Wiederh" auf Null gesetzt wird, der Zeilenzähler "i" auf die aktuelle Zeilennummer gesetzt wird und die Vergleichsvariable "Count" auf Eins weniger als der "ZonenZeilenCount" gesetzt wird.

Nach dem Durchlaufen der Verarbeitungsschritte "COMPR_Y" sind alle Zeilen, die Wiederholungszeilen sind, mit "Ignore" (I) gekennzeichnet, und im "ZonenZeilenCount" der Zeilen, in denen jeweils eine Wiederholungsfolge beginnt, ist die Zahl der Wiederholungen eingetragen.

In Fig. 22 ist das Ergebnis dieser Verarbeitungsphase für das Beispiel von Fig. 12 gezeigt. Die Zeilen 3 und 4 einerseits und 5 und 6 andererseits bilden jeweils eine Wiederholungsfolge mit jeweils einer Wiederholung. Deshalb enthält der "ZonenZeilenCount" der Zeilen 3 und 5 den Wert "1" und die Zeilen 4 und 6 sind mit "Ignore" (I) gekennzeichnet.

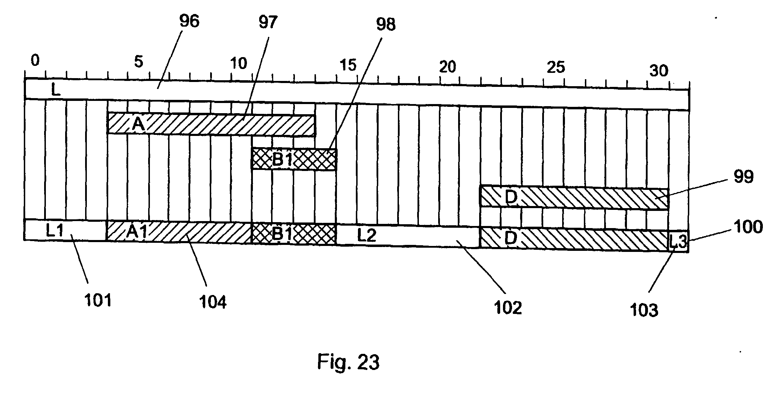

Die Fig. 23 zeigt die überlappungsfreie Komprimierung der Zeilen im Zwischenpuffer, die in Fig. 19 unter "COMPR_X" zusammengefaßt war, am Beispiel der Zeile 1 aus Fig. 22. Die Objekte L (96), A (97), B1 (98) und D (99), die sich in der Zeile überlappen, sind der Übersicht wegen untereinander dargestellt. Die Verarbeitungsschritte "COMPR_X" gehen die Zeile von links nach rechts durch, stellen fest, welches Objekt welche anderen überdeckt, ob ein Objekt andere vollständig überdeckt oder nur teilweise, und erzeugen schließlich eine resultierende Zeile (100), die lückenlos und überlappungsfrei mit Objekten belegt ist. Zum Beispiel wird das ursprüngliche Objekt L (96) in drei neue Objekte L1 (101), L2 (102), L3 (103) aufgeteilt, die die Lücken zwischen den anderen Objekten füllen. Das Objekt A wird zu einem neuen Objekt A1 (104) verkürzt, das bis zum Beginn des Objekts B1 reicht.

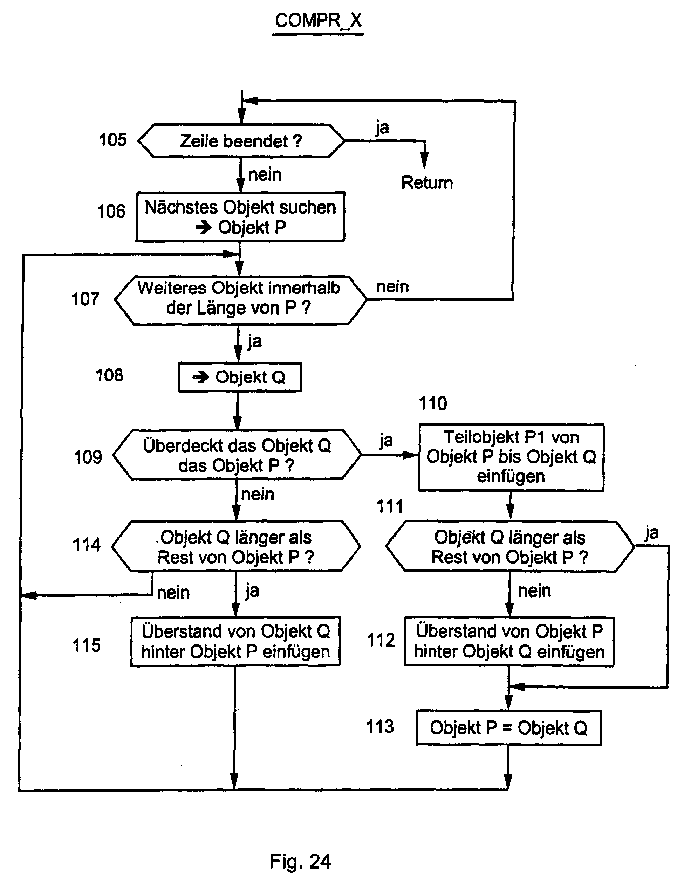

Die Fig. 24 zeigt die Schritte "COMPR_X" noch einmal als Ablaufdiagramm. In der Abfrage (105) wird geprüft, ob das Ende der Zeile erreicht ist. Wenn ja, ist die Verarbeitung beendet, sonst wird im Schritt (106) das nächste Objekt in der Zeile gesucht. Es bekommt die vorübergehende Bezeichnung "Objekt P". Anhand seiner "ObjektNr" und "Länge" kann festgestellt werden, ob es andere Objekte überdeckt und zu welchem Teil. In der Abfrage (107) wird untersucht, ob es innerhalb der Länge von P noch ein weiteres Objekt gibt. Wenn ja, bekommt es im Schritt (108) die vorübergehende Bezeichnung "Objekt Q". Wenn nein, wird wieder geprüft, ob die Zeile beendet ist (105) und das nächste Objekt wird gesucht (106).

In der Abfrage (109) wird anhand der "ObjektNr" von P und Q festgestellt, welches Objekt das andere überdeckt. Überdeckt das Objekt Q das Objekt P, wird im Schritt 110 ein Teilobjekt P1 mit den Parametern von P gebildet, dessen Länge aber nur vom Anfang von P bis zum Anfang von Q reicht. Im Beispiel von Fig. 23 sind die Objekte L1 (101) und A1 (104) solche Teilobjekte. Anschließend wird in der Abfrage (111) geprüft, ob das Objekt Q länger als der verbleibende Rest von P ist. Wenn ja, wird Q das neue Objekt P und es wird ein weiteres Objekt gesucht (107). Wenn nein, wird der überstehende Teil des Objekts P hinter dem Objekt Q eingefügt (112). Wenn die Abfrage (109) das alternative Ergebnis hat, werden die Abfrage (114) und der Schritt (115) analog zu den Vorgängen (111) und (112) durchgeführt.

Die folgende Tabelle enthält Ausschnitte der Delta-Liste, die sich nach Durchlauf aller Verarbeitungsschritte für die Objekte in Fig. 3 ergibt. Dabei werden wegen der leichteren Lesbarkeit die folgenden Schreibweisen für die Delta-Kommandos verwendet:
- LHD_ZONE (y, b): für das Kommando LHD_ZONE mit den Parametern y = Y-cmpr und b = bits,
- LHD_REPEATS (l, g): für das Kommando LHD_REPEATS mit den Parametern I = Lauflänge und g = Grauwert,
- LHD_SCREEN (i): für das Kommando LHD_SCREEN mit dem Parameter i = Nummer des Rasterverfahrens.

Erzeugte Delta-Liste für die Objekte in Fig. 3:

| | |
|---|---|
| | LHD_HEADER (.....) |
| | LHD_BAND |
| Zeile 0 | LHD_START |
| | LHD_ZONE (0, 8) |
| | LHD_SCREEN(1) |
| | LHD_REPEATS (11, 255) |
| | LHD_REPEATS (4, 4) |
| | LHD_REPEATS (7, 255) |
| | LHD_REPEATS (7, 162) |
| | LHD_REPEATS (3, 255) |
| Zeile 1 | LHD_START |
| | LHD_ZONE (0, 8) |
| | LHD_REPEATS (4, 255) |
| | LHD_REPEATS (7, 128) |
| | LHD_REPEATS (4, 4) |
| | LHD_REPEATS (7, 255) |
| | LHD_SCREEN (2) |
| | LHD_REPEATS(9,51) |
| | LHD_SCREEN (1) |
| | LHD_REPEATS (1,255) |
| | • |
| | • |
| Zeilen 3 und 4 | LHD_START |
| | LHD_ZONE (1, 8) |
| | LHD_REPEATS (4, 255) |
| | LHD_REPEATS (6, 128) |
| | LHD_REPEATS (7, 4) |
| | LHD_REPEATS (5, 255) |
| | LHD_REPEATS (7, 162) |
| | LHD_REPEATS (3, 255) |
| | • |
| | • |
| | • |

Die Summe der Lauflängen in jeder Zeile der Zone ergibt jeweils die Zonenbreite von 32 Pixel. In den Delta-Kommandos für die Zeilen 3 und 4 zeigt der Parameter y = 1 im Kommando LHD_ZONE (y, b) an, daß die folgenden Lauflängen-Kommandos LHD_REPEATS (l, g) für beide Zeilen in gleicher Weise gelten.

## Patentansprüche

1. Verfahren zur Erzeugung einer Datei (17) zur Beschreibung einer zu reproduzierenden Druckseite für die elektronische Aufzeichnung, wobei eine programmierte Seitenbeschreibung (1) des Inhalts der Druckseite, bestehend aus Text-, Grafik- und Bildinformationen, durch einen Interpreter (3) verarbeitet wird und eine Liste (4) von ersten grafischen Objekten erzeugt wird,
**dadurch gekennzeichnet, daß**
- die ersten Objekte in zweite überlappungsfreie Objekte umgewandelt werden,
- für die zweiten überlappungsfreien Objekte Bildpunkte mit zugeordneten Grauwerten erzeugt werden,
und
- die Bildpunkte zu einer pixel- und zeilenweise organisierten Datei (17) zur Beschreibung der Druckseite zusammengefaßt werden, die für jeden Bildpunkt der Druckseite einen Grauwert enthält.

2. Verfahren nach Anspruch 1, **dadurch gekennzeichnet, daß** die Datei (17) datenkomprimiert ist, indem die sich in einer ersten Richtung wiederholenden Gauwerte als Lauflängen codiert sind.

3. Verfahren nach Anspruch 2, **dadurch gekennzeichnet, daß** die Datei (17) datenkomprimiert ist, indem in einer zweiten Richtung, die senkrecht zur ersten Richtung ist, sich wiederholende Lauflängen codiert sind.

4. Verfahren nach einem der Ansprüche 1 bis 3, **dadurch gekennzeichnet, daß** die Datei (17) durch Reduzierung der Zahl der Bits je Grauwert datenkomprimiert ist.

5. Verfahren nach einem der Ansprüche 1 bis 4, **dadurch gekennzeichnet, daß** die Datei (17) durch Differenz-Codierung zwischen den Grauwerten benachbarter Bildpunkte datenkomprimiert ist.

6. Verfahren nach einem der Ansprüche 1 bis 5, **dadurch gekennzeichnet, daß** für die zweiten Objekte Statusinformationen in einem Zwischenpuffer gespeichert werden.

7. Verfahren nach Anspruch 6, **dadurch gekennzeichnet, daß** aufgrund der Statusinformationen im Zwischenpuffer die zweiten Objekte überlappungsfrei gemacht werden.

8. Verfahren nach Anspruch 6, **dadurch gekennzeichnet, daß** aufgrund der Statusinformationen im Zwischenpuffer die zweiten Objekte datenkomprimiert werden.

9. Verfahren nach einem der Ansprüche 1 bis 8, **dadurch gekennzeichnet, daß** für eine Druckseite oder einen Druckbogen mehrere Contone-Maps erzeugt werden.

10. Verfahren nach einem der Ansprüche 1 bis 9, **dadurch gekennzeichnet, daß** die Datei (17) zur elektronischen Aufzeichnung von Druckvorlagen, Druckformen und Drucken für verschiedene Ausgabeprozesse und Druckverfahren eingesetzt wird, wie Filmbelichtung, Druckplattenbelichtung, Proofbelichtung, Bildschirmdarstellung, Tiefdruckgravur, digitaler Druck.

11. Verfahren nach einem der Ansprüche 1 bis 10, **dadurch gekennzeichnet, daß** die Datei (17) ohne Anhalten des Ausgabegerätes (8) aufgezeichnet wird.

12. Verfahren nach einem der Ansprüche 1 bis 11, **dadurch gekennzeichnet, daß** die Datei (17) zur Ausgabe in eine gerasterte Bit-Map (6) umgerechnet wird.

13. Verfahren nach einem der Ansprüche 1 bis 12, **dadurch gekennzeichnet, daß** die Datei (17) in einer Auflösung erzeugt wird, die von der Auflösung des Ausgabegeräts (8) unabhängig ist.

14. Verfahren nach einem der Ansprüche 1 bis 13, **dadurch gekennzeichnet, daß** die Datei (17) Kommandos und Parameter zur Steuerung ihrer Weiterverarbeitung enthält.

## Claims

1. Process for generating a file (17) for describing a printed page to be reproduced for electronic recording, wherein a programmed page description (1) of the contents of the printed page, consisting of text, graphics and picture information, is processed by an interpreter (3) and a list (4) of first graphic objects is generated,
**characterised in that**
- the first objects are converted into second non-overlapping objects
- picture elements with associated gray values are generated for the second non-overlapping objects, and
- the picture elements are combined into a file (17), organised in pixels and lines for describing the printed page, which contains one gray value for each picture element of the printed page.

2. Process according to Claim 1, **characterised in that** the file (17) is data-compressed **in that** the gray values repeated in a first direction are coded as running lengths.

3. Process according to Claim 2, **characterised in that** the file (17) is data-compressed **in that** repeated running lengths are coded in a second direction which is perpendicular to the first direction.

4. Process according to one of Claims 1 to 3, **characterised in that** the file (17) is data-compressed by reducing the number of bits per gray value.

5. Process according to one of Claims 1 to 4, **characterised in that** the file (17) is data-compressed by differential coding between the gray values of adjacent picture elements.

6. Process according to one of Claims 1 to 5, **characterised in that** for the second objects status information is stored in an intermediate buffer.

7. Process according to Claim 6, **characterised in that** on the basis of the status information in the intermediate buffer the second objects are made non-overlapping.

8. Process according to Claim 6, **characterised in that** on the basis of the status information in the intermediate buffer the second objects are data-compressed.

9. Process according to one of Claims 1 to 8, **characterised in that** several Contone maps are generated for one printed page or one printed sheet.

10. Process according to one of Claims 1 to 9, **characterised in that** the file (17) is used for the electronic recording of first prints, forms and prints for various output processes and printing procedures, such as film exposure, printing plate exposure, proof exposure, screen representation, rotogravure and digital print.

11. Process according to one of Claims 1 to 10, **characterised in that** the file (17) is recorded without stopping the output device (8).

12. Process according to one of Claims 1 to 11, **characterised in that** the file (17) is converted for output in a raster bit map (6).

13. Process according to one of Claims 1 to 12, **characterised in that** the file (17) is generated in a resolution which is independent of the resolution of the output device (8).

14. Process according to one of Claims 1 to 13, **characterised in that** the file (17) contains commands and parameters for controlling its further processing.

## Revendications

1. Procédé pour générer un fichier (17) décrivant une page d'impression à reproduire pour un enregistrement électronique,
selon lequel
on traite une écriture de page (1) programmée du contenu de la page d'impression formé d'informations de texte, d'informations graphiques et d'informations d'images, à l'aide d'un interpréteur (3) et on génère une liste (4) de premiers objets graphiques,
**caractérisé en ce qu'**
- on convertit les premiers objets en des seconds objets sans chevauchement,
- on génère des points image avec des niveaux de gris associés pour les seconds objets sans chevauchement et
- on regroupe les points image en un fichier (17) organisé par pixels et par lignes pour décrire la page d'impression et qui contient un niveau de gris pour chaque point image de la page d'impression.

2. Procédé selon la revendication 1,
**caractérisé en ce qu'**
on comprime les données du fichier (17) en codant les niveaux de gris qui se répètent dans une première direction comme des longueurs de parcours.

3. Procédé selon la revendication 2,
**caractérisé en ce qu'**
on comprime les données du fichier (17) en codant les longueurs de parcours qui se répètent dans une seconde direction perpendiculaire à la première direction.

4. Procédé selon l'une quelconque des revendications 1 à 3,
**caractérisé en ce qu'**
on comprime les données du fichier (17) pour réduire le nombre de bits par niveau de gris.

5. Procédé selon l'une quelconque des revendications 1 à 3,
**caractérisé en ce qu'**
on comprime les données du fichier (17) par codage de différence entre les niveaux de gris de points image voisins.

6. Procédé selon l'une quelconque des revendications 1 à 5,
**caractérisé en ce qu'**
on mémorise les informations d'état pour les deuxièmes objets dans une mémoire tampon intermédiaire.

7. Procédé selon la revendication 6,
**caractérisé en ce qu'**
on rend les seconds objets sans chevauchement à l'aide des informations d'état dans la mémoire tampon intermédiaire.

8. Procédé selon la revendication 6,
**caractérisé en ce qu'**
on comprime les données des seconds objets à partir des informations d'état de la mémoire tampon intermédiaire.

9. Procédé selon l'une quelconque des revendications 1 à 8,
**caractérisé en ce qu'**
on génère plusieurs matrices d'éléments d'image en dégradé continu pour une page d'impression ou une feuille d'impression.

10. Procédé selon l'une quelconque des revendications 1 à 9,
**caractérisé en ce qu'**
on utilise le fichier (17) pour l'enregistrement électronique de modèles d'impression, de formes d'impression et d'impressions pour différents procédés d'émission et d'impression tels que l'exposition de films, l'exposition de plaques d'impression, l'exposition d'épreuves, la représentation sur un écran de contrôle, l'impression en taille douce, l'impression numérique.

11. Procédé selon l'une quelconque des revendications 1 à 10,
**caractérisé en ce qu'**
on enregistre le fichier (17) sans arrêter l'appareil d'émission (8).

12. Procédé selon l'une quelconque des revendications 1 à 11,
**caractérisé en ce qu'**
on convertit le fichier (17) pour émettre une carte bits (6) tramée.

13. Procédé selon l'une quelconque des revendications 1 à 12,
**caractérisé en ce qu'**
on génère le fichier (17) avec une résolution indépendante de la résolution de l'appareil d'émission (8).

14. Procédé selon l'une quelconque des revendications 1 à 13,
**caractérisé en ce que**
le fichier (17) contient des ordres et des paramètres de commande de son traitement.
